(19) Europäisches Patentamt European Patent Office Office européen des brevets

(11) **EP 2 681 446 B1**

(12) **EUROPÄISCHE PATENTSCHRIFT**

(45) Veröffentlichungstag und Bekanntmachung des Hinweises auf die Patenterteilung:
**16.12.2015 Patentblatt 2015/51**

(21) Anmeldenummer: **12707576.0**

(22) Anmeldetag: **05.03.2012**

(51) Int Cl.:
*F03B 17/02* (2006.01)    *F03B 17/04* (2006.01)

(86) Internationale Anmeldenummer:
**PCT/EP2012/053764**

(87) Internationale Veröffentlichungsnummer:
**WO 2012/119993 (13.09.2012 Gazette 2012/37)**

(54) **HYDROSTATISCHER MOTOR UND VERFAHREN ZUM BETREIBEN EINES HYDROSTATISCHEN MOTORS**

HYDROSTATIC MOTOR AND METHOD OF OPERATING SUCH A HYDROSTATIC MOTOR

MOTEUR HYDROSTATIQUE ET PROCÉDÉ POUR OPÉRER UN TEL MOTEUR HYDROSTATIQUE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **04.03.2011 DE 102011013038**

(43) Veröffentlichungstag der Anmeldung:
**08.01.2014 Patentblatt 2014/02**

(73) Patentinhaber: **Rahmanifar, Majid**
**81675 München (DE)**

(72) Erfinder: **Rahmanifar, Majid**
**81675 München (DE)**

(74) Vertreter: **Samson & Partner Patentanwälte mbB**
**Widenmayerstraße 6**
**80538 München (DE)**

(56) Entgegenhaltungen:
**WO-A1-03/076798    WO-A1-2004/067952**
**CA-A1- 2 437 599    US-A- 3 412 482**
**US-A- 4 742 242**

**Beschreibung**

GEBIET DER ERFINDUNG

Die vorliegende Erfindung betrifft das Gebiet von Motoren, welche eine mechanische Ausgangsleistung bereitstellen.

HINTERGRUND DER ERFINDUNG

Es ist bekannt, dass Schwimmkörper in Flüssigkeiten einer Auftriebskraft unterliegen, die gemäß dem archimedischen Prinzip gleich dem Gewicht der von dem Schwimmkörper verdrängten Flüssigkeit ist. Dies ist den Druckschriften CA 2 437 599 A1, US 4 742 242 A, WO 03/076798 A1, WO 2004/067952 A1 und US 3 412 482 A ebenso zu entnehmen

ZUSAMMENFASSUNG DER ERFINDUNG

Es existiert ein allgemeines Bedürfnis, neue Quellen zur Bereitstellung von mechanischer Ausgangsleistung zu erschließen.

Diesem Bedürfnis wird durch die Gegenstände der unabhängigen Patentansprüche Rechnung getragen. Vorteilhafte Ausführungsformen der hierin offenbarten Gegenstände sind in den abhängigen Ansprüchen beschrieben.

Gemäß einem ersten Aspekt der hierin offenbarten Gegenstände wird ein Motor bereitgestellt, wobei der Motor ausgebildet ist, um unter Verwendung einer hydrostatischen Kraft ein Drehmoment zu erzeugen.

Dieser Aspekt der hierin offenbarten Gegenstände basiert auf dem Grundgedanken, eine hydrostatische Auftriebskraft zur Produktion eines aufgrund einer Verlagerung des Schwerpunkts der Zykliereinheit sich zyklusmäßig wiederholenden Drehmoments zu verwenden.

Gemäß einer Ausführungsform enthält der Motor ein Antriebselement; wobei die Zykliereinheit einen Schwimmkörper aufweist; wobei die Zykliereinheit in einem Fluid angeordnet ist, so dass der Schwimmkörper in einer unteren Position einer Auftriebskraft unterworfen ist, welche den Schwimmkörper in einer Aufwärtsbewegung zu einer oberen Position drängt und dabei das Antriebselement antreibt; und wobei der Schwerpunkt der Zykliereinheit mit dem Schwimmkörper in der oberen Position über dem Antriebselement liegt, und der Schwerpunkt dadurch die Zykliereinheit in eine Ausgangsposition treibt, in welcher der Schwimmkörper in der unteren Position ist.

Somit wird gemäß einer Ausführungsform der hierin offenbarten Gegenstände ein Motor bereitgestellt, der Motor enthaltend: ein Antriebselement; eine Zykliereinheit enthaltend einen Schwimmkörper; wobei die Zykliereinheit in einem Fluid angeordnet ist, so dass der Schwimmkörper in einer unteren Position einer Auftriebskraft unterworfen ist, welche den Schwimmkörper in einer Aufwärtsbewegung zu einer oberen Position drängt und dabei das Antriebselement antreibt; und wobei der Schwerpunkt der Zykliereinheit mit dem Schwimmkörper in der oberen Position über dem Antriebselement liegt, und der Schwerpunkt dadurch die Zykliereinheit in eine Ausgangsposition treibt, in welcher der Schwimmkörper in der unteren Position ist.

Gemäß einer Ausführungsform ist das Antriebselement eine Abtriebswelle des Motors. Gemäß einer weiteren Ausführungsform ist der Schwimmkörper ein formstabiler Schwimmkörper, beispielsweise ein formstabiler Hohlkörper. Gemäß einer Ausführungsform ist die Dichte des Schwimmkörpers geringer als die Dichte des Fluids.

Das Fluid kann zum Beispiel eine Flüssigkeit sein. Ferner kann jedes andere fluide Medium, welches flüssigkeitsähnliche Eigenschaften aufweist und welches insbesondere in der Lage ist, eine Auftriebskraft auf den Schwimmkörper zu erzeugen, verwendet werden.

Gemäß einer weiteren Ausführungsform umfasst die Zykliereinheit ein deformierbares Element, welches ein Füllmedium aufweist, wobei ein Schwimmkörper (beispielsweise der in vorstehenden Ausführungsformen beschriebene Schwimmkörper) und das deformierbare Element in dem Fluid angeordnet sind, so dass der Schwimmkörper einen ersten Teil des deformierbaren Elements während der Aufwärtsbewegung komprimiert, wobei der erste Teil über dem Schwimmkörper angeordnet ist; und das Komprimieren des ersten Teils des deformierbaren Elementes das Füllmedium in einen zweiten Teil des deformierbaren Elementes drängt, wobei der zweite Teil unter dem Schwimmkörper angeordnet ist. Folglich ist der erste Teil des deformierbaren Elements komprimiert, wenn sich der Schwimmkörper in der oberen Position befindet. Gemäß einer Ausführungsform hat das mit dem Füllmedium gefüllte, deformierbare Element eine geringere (oder, in einer anderen Ausführungsform, eine höhere) durchschnittliche Dichte als der Schwimmkörper. Gemäß einer Ausführungsform ist das deformierbare Element ein Luftsack. Gemäß einer weiteren Ausführungsform ist das deformierbare Element ein Ballon, beispielsweise in Ballon mit 2 oder mehr Segmenten, die in einer Ausführungsform allgemein als Flügel bezeichnet werden. Gemäß einer weiteren hierin offenbarten Ausführungsform werden die Segmente als Luftkammern bezeichnet.

Es versteht sich, dass die hierin verwendeten Begriffe aufwärts, abwärts, obere Position und untere Position sich auf die Richtung der Schwerkraft bzw. die Richtung der Auftriebskraft beziehen. So bezeichnet eine Richtung nach oben bzw. aufwärts allgemein eine Bewegung in Richtung der Auftriebskraft in der Flüssigkeit und eine Richtung nach unten allgemein eine Richtung entgegengesetzt der Richtung, in welcher die Auftriebskraft in der Flüssigkeit wirkt.

Das deformierbare Element liefert eine Möglichkeit der Verlagerung des Schwerpunkts während der Aufwärtsbewegung des Schwimmkörpers, um in dessen oberer Position in einem Schwerpunkt der Zykliereinheit zu resultieren, der über dem Antriebselement liegt. Die Zykliereinheit ist daher einer effektiven Kraft unterworfen, die nach unten, d.h. entgegen der Auftriebskraft wirkt. Zum Beispiel durch Verriegeln des Schwimmkörpers mit der Zykliereinheit kann bewirkt werden, dass der Schwimmkörper zusammen mit der Zykliereinheit aufgrund des hohen Schwerpunkts in die Ausgangsposition getrieben wird.

Gemäß einer weiteren Ausführungsform ist der Schwimmkörper in der oberen Position mit dem deformierbaren Element verriegelbar und resultiert dadurch in einem verriegelten Zustand der Zykliereinheit, wobei der Schwerpunkt der Zykliereinheit in ihrem verriegelten Zustand mit dem Schwimmkörper in der oberen Position über dem Antriebselement liegt und der Schwerpunkt dadurch die Zykliereinheit in die Ausgangsposition treibt. Gemäß einer Ausführungsform ist der Schwimmkörper mit dem ersten Teil des deformierbaren Elements verriegelbar, wobei der erste Teil komprimiert ist, wenn sich der Schwimmkörper in der oberen Position befindet. Durch die Verriegelung des Schwimmkörpers mit der Zykliereinheit wird vermieden, dass der Schwimmkörper in der oberen Position bleibt. Vielmehr wird durch die Verriegelung erreicht, dass der Schwimmkörper sich zusammen mit dem deformierbaren Element als eine Einheit bewegt. Auf diese Weise kann zuverlässig die Ausgangsposition der Zykliereinheit hergestellt werden. Gemäß einer Ausführungsform ist die Verriegelung des Schwimmkörpers mit dem deformierbaren Element derart, dass die äußere Form des deformierbaren Element fixiert ist. Es versteht sich, dass die Fixierung der äußeren Form des deformierbaren Körpers nicht in einem exakten mathematischen Sinne möglich ist. Vielmehr ist die Fixierung der äußeren Form in der Regel insoweit erreichbar, dass die äußere Form im Wesentlichen unverändert bleibt. Gemäß einer weiteren Ausführungsform kann der Motor einen Verriegelungsmechanismus zum Verriegeln des Schwimmkörpers mit dem deformierbaren Element enthalten, mit welchem der Schwimmkörper in seiner oberen Position mit dem deformierbaren Element verriegelbar ist.

Gemäß einer weiteren Ausführungsform ist mindestens eines von dem Schwimmkörper und dem deformierbaren Element mit dem Antriebselement gekoppelt oder koppelbar, um so eine Kraft auf das Antriebselement während der Aufwärtsbewegung des Schwimmkörpers auszuüben.

Gemäß einer weiteren Ausführungsform weist der Motor eine Kopplungsvorrichtung auf, welche angepasst ist zum Koppeln des Schwimmkörpers an das Antriebselement während der Aufwärtsbewegung des Schwimmkörpers, um dadurch das Antriebselement anzutreiben, insbesondere um das Antriebselement in einer Antriebsrichtung anzutreiben. Gemäß einere weiteren Ausführungsform ist die Kopplungsvorrichtung angepasst, um den Schwimmkörper von dem Antriebselement bei Bedarf zu entkoppeln. Beispielsweise kann bei bestimmten Konfigurationen der Zykliereinheit eine solche Entkopplung unter bestimmten Bedingungen erforderlich sein, beispielsweise während des Treibens der Zykliereinheit in die Ausgangsposition. Auf diese Weise wird es ermöglicht, dass der Schwimmkörper entgegengesetzt zu der Aufwärtsbewegung in die untere Position gebracht werden kann ohne das Antriebselement entgegen der Antriebsrichtung anzutreiben. Zum Beispiel, wenn das Antriebselement eine Abtriebswelle ist, die durch die Aufwärtsbewegung des Schwimmkörpers in eine Rotationsbewegung mit einem vorbestimmten Drehsinn versetzt wird, kann durch die Kopplungsvorrichtung bzw. die Entkopplung des Schwimmkörpers von dem Antriebselement das Treiben des Schwimmkörpers in die Ausgangsposition entgegengesetzt zu dem vorbestimmten Drehsinn erfolgen.

Gemäß einer weiteren Ausführungsform ist das Antriebselement ein rotierbares Element, welches eine Rotationsachse aufweist; und das deformierbare Element und der Schwimmkörper sind konfiguriert, um zusammen um die Rotationsachse zu rotieren, während des Treibens der Zykliereinheit in die Ausgangsposition. In der Ausgangsposition ist dann der erste Teil des deformierbaren Elements bezüglich des Schwimmkörper so angeordnet, dass der erste Teil des deformierbaren Elements bei einer (erneuten) Aufwärtsbewegung des Schwimmkörpers unter dem Schwimmkörper angeordnet ist. In der Ausgangsposition selbst kann der erste Teil des deformierbaren Elements neben dem Schwimmkörper angeordnet sein. Ferner kann der erste Teil des deformierbaren Elements, beispielsweise in einer Konfiguration, in der zwei Zykliereinheiten nebeneinander angeordnet sind und synchron betrieben werden, in der Ausgangsposition zwischen den Schwimmkörpern der beiden Zykliereinheiten angeordnet sein.

Gemäß anderen Ausführungsformen kann die Kopplungsvorrichtung zum Koppeln des deformierbaren Elements mit dem Antriebselement ausgebildet sein statt zum Koppeln des Schwimmkörper mit dem Antriebselement.

Gemäß einer Ausführungsform umfasst die Kopplungsvorrichtung durch Aktoren betätigte Kupplungselemente, wobei die Aktoren von einer Steuervorrichtung gesteuert sind. Gemäß anderen Ausführungsformen ist die Kopplungsvorrichtung durch mindestens einen Freilauf gebildet. Je nach Konfiguration können zwei oder mehr Freiläufe erforderlich sein, um die hierin beschriebene Funktionalität zu gewährleisten.

Gemäß einer weiteren Ausführungsform enthält der Motor ferner einen Verriegelungsmechanismus zum Verriegeln der Position des Schwimmkörpers relativ zu dem deformierbaren Element während der gemeinsamen Rotation um die Rotationsachse. Zum Beispiel kann der Verriegelungsmechanismus ein Verriegelungselement (z. B. mindestens einen Vorsprung) an einem von dem Schwimmkörper und an dem deformierbaren Element und ein mit dem ersten Verriegelungselement in Eingriff bringbares zweites Verriegelungselement an dem anderen von dem Schwimmkörper und an dem deformierbaren Element aufweisen. Beispielsweise kann das Verbindungsteil für die gemeinsame Rotation des Schwimmkörpers und des deformierbaren Elements mit einem Vorsprung an dem Schwimmkörper als auch mit einem Vorsprung an dem deformierbaren Element in Eingriff gebracht werden, um die Position des Schwimmkörpers relativ zu dem deformierbaren Element während der gemeinsamen Rotation um die Rotationsachse zu fixieren. Das in Eingriff bringen des ersten und des zweiten Verbindungselement kann zum Beispiel durch eine mechanische Vorrichtung, die durch die Bewegung des Schwimmkörpers oder des Antriebselements betätigt wird, oder durch einen Aktor, der von einer Steuervorrichtung gesteuert wird. Der Verriegelungsmechanismus ist gemäß einer Ausführungsform ferner konfiguriert zum Entriegeln des Schwimmkörpers und des deformierbaren Elements, dadurch erlaubend eine Aufwärtsbewegung des Schwimmkörpers. Das heißt, nach dem Entriegeln des Schwimmkörpers und des deformierbaren Elements kann der Schwimmkörper wie oben beschrieben wieder die Aufwärtsbewegung in die obere Position durchführen und dadurch das Antriebselement antreiben.

Gemäß einer weiteren Ausführungsform der hier offenbarten Gegenstände enthält der Motor zwei oder mehr Zykliereinheiten, wie sie hierin beschrieben sind. Zum Beispiel enthält der Motor gemäß einer Ausführungsform die oben beschriebene Zykliereinheit als eine erste Zykliereinheit und weist ferner eine zweite Zykliereinheit auf, die konfiguriert ist wie die Zykliereinheit nach einer der hierin beschriebenen Ausführungsformen. Gemäß einer weiteren Ausführungsform ist die zweite Zykliereinheit analog zu der ersten Zykliereinheit ausgebildet. Gemäß einer weiteren Ausführungsform sind die erste Zykliereinheit und die zweite Zykliereinheit für eine gemeinsame Rotation um eine gemeinsame Rotationsachse konfiguriert. Zum Beispiel können gemäß einer Ausführungsform das Antriebselement der ersten Zykliereinheit und das Antriebselement der zweiten Zykliereinheit koaxial ausgebildet sein. Gemäß einer weiteren Ausführungsform ist die zweite Zykliereinheit spiegelbildlich zu der ersten Zykliereinheit ausgebildet. Beispielsweise können die beiden Zykliereinheiten nebeneinander angeordnet sein, wobei der Schwimmkörper sich jeweils in einem Halbkreissegment (Segment, welches einen Halbkreis umspannt), welches der jeweiligen Zykliereinheit zugeordnet ist, bewegt.

Wenn der Motor zwei oder mehr Zykliereinheiten aufweist, können die Zykliereinheiten gemeinsame Elemente aufweisen. Beispielsweis kann der Verriegelungsmechanismus zum Verriegeln der Position des Schwimmkörpers relativ zu dem deformierbaren Element ausgebildet sein, um die Schwimmkörper von zwei Zykliereinheiten relativ zueinander zu fixieren, beispielsweise durch starres Verbinden der Schwimmkörper. Dadurch werden die zwischen den Schwimmkörpern befindlichen ersten Teile des betreffenden deformierbaren Elements von zwei Zykliereinheiten relativ zueinander fixiert und die ersten Teile werden relativ zu dem Schwimmkörper der betreffenden Zykliereinheit fixiert. Gemäß einer weiteren Ausführungsform weisen die zwei oder mehr Zykliereinheiten ein gemeinsames deformierbares Element auf.

Gemäß einer weiteren Ausführungsform ist ein weiterer Verriegelungsmechanismus vorgesehen, mit welcher die Zykliereinheit räumlich fixierbar ist. Diese räumliche Fixierung der Zykliereinheit erlaubt eine Aufwärtsbewegung des Schwimmkörpers, verhindert jedoch, dass sich die Zykliereinheit aufgrund einer Schwerpunktsverlagerung dreht. Durch Entriegeln dieses weiteren Verriegelungsmechanismus ist die Zykliereinheit drehbar und daher in die Ausgangsposition bringbar. Gemäß einer Ausführungsform ist vorgesehen, dass die räumliche Fixierung der Zykliereinheit nur dann gelöst wird, wenn die Position des Schwimmkörpers relativ zu dem deformierbaren Element verriegelt (fixiert) ist.

Gemäß einer weiteren Ausführungsform ist das Antriebselement der ersten Zykliereinheit und das Antriebselement der zweiten Zykliereinheit über jeweils einen Antriebsweg mit einem Getriebe gekoppelt, wobei das Getriebe betreibbar ist, um die Bewegung des Antriebselements der ersten Zykliereinheit und die Bewegung des Antriebselements der zweiten Zykliereinheit zu kombinieren. Zum Beispiel ist gemäß einer Ausführungsform das Antriebselement der ersten Zykliereinheit über einen Antriebsstrang mit dem Getriebe gekoppelt und das Antriebselement der zweiten Zykliereinheit ist über einen zweiten Antriebsstrang mit dem Getriebe gekoppelt. Gemäß einer Ausführungsform ist das Getriebe ein Planetengetriebe, wobei der erste Antriebsstrang gekoppelt ist mit einem von einem Sonnenrad, einem Planetenträger oder einem Hohlrad des Planetengetriebes, der zweite Antriebsstrang mit einem anderen von dem Sonnenrad, dem Planetenträger oder dem Hohlrad gekoppelt ist und eine Abtriebswelle des Planetengetriebes mit dem verbleibenden von dem Sonnenrad, dem Planetenträger und dem Hohlrad gekoppelt ist. Gemäß einer Ausführungsform ist das Antriebselement der ersten Zykliereinheit gebildet durch eines von einem Sonnenrad, einem Planetenträger oder einem Hohlrad des Planetengetriebes. Ferner kann das Antriebselement der zweiten Zykliereinheit durch ein anderes von dem Sonnenrad, dem Planetenträger oder dem Hohlrad gebildet sein und eine Abtriebswelle des Planetengetriebes ist mit dem verbleibenden von dem Sonnenrad, dem Planetenträger und dem Hohlrad gekoppelt.

Gemäß einer anderen Ausführungsform enthält das Getriebe Freiläufe und/oder Kupplungselemente, wobei die Kupplungselemente in einer Ausführungsform durch Aktoren betätigt werden, um die Bewegung der Antriebselemente zu einer kontinuierlichen Bewegung einer Abtriebswelle des Getriebes zu kombinieren.

Gemäß einer Ausführungsform ist die Dichte des Füllmediums geringer als die Dichte des Fluids. Zum Beispiel ist das Füllmedium in einer Ausführungsform ein Gas, beispielsweise Luft.

Gemäß einer Ausführungsform ist der Motor ein Gravitations-Konversionssystem (engl. gravity conversion system, GCS). Beispielsweise ist der Motor ein "Mehrkörper-System" bestehend aus der Kombination einer Anlage und des Fluides, in das die Anlage getaucht ist. Gemäß einer Ausführungsform generiert die Anlage ihre Antriebskraft aus dem Auftrieb zweier Schwimmer des Zyklierelements.

Nachfolgend werden einige Ausführungsformen und Merkmale einer solchen Anlage beschrieben.

Gemäß einer Ausführungsform ist der Hauptkorpus volumenmäßig wie auch gewichtmäßig ausgeglichenen und zylinderförmig. Die Schwimmer werden vom Wasser auf Grund eines künstlich hergestellten bielementaren Densitätsgefälles aufgetrieben. Als Komponente des Densitätsgefälles dient, außer dem Hauptkorpus der Anlage eine Fluidkammer. Das Gefälle substantiiert sich durch eine wesentlich niedrigere Dichte des Hauptkorpus, als die des Fluids. Die Fluidkammer bietet angemessene Größe und Tiefe und ihre Beschaffenheit erfüllt die Anforderungen der Funktion und der Beherbergung der Anlage. Dadurch, dass die Anlage samt ihres Hauptkorpus während des gesamten Betriebes unter der Fluidoberfläche bleibt, d.h. in das Fluid eingetaucht bleibt, besteht auch das Gefälle fort. Die als Antriebselement einer GCS Anlage dienenden Schwimmer werden - als die leichtere Komponente eines Densitätsgefälles - direkt vom Fluid aufgetrieben. Das durch Schwimmkörper entstehende Gefälle im Wasser ist bi-elementar und nicht temperaturbasiert. Dadurch, dass das Gefälle hier künstlich hergestellt wird, muss auch für die Wiederholung des Auftriebes einer GCS Anlage durch technische Eingriffe gesorgt werden.

Diese Aufgabe umfasst eine Problematik aus komplexen Problemen und schwierigen Anforderungen, die im Rahmen des GCS-Konzepts in einzelne Komponenten zerlegt und durch Einsatz von einschlägigen Prinzipien sowie durch eigens entwickelten Konstruktionen in verschiedenen Entwicklungsstufen bewältigt wurden. Das Gravity Conversion System profitiert von einem komplexen Einsatz des Fluidauftriebs, der aus quasi-statischen state-by-state geführten Bewegungen eine zyklische Rotation entwickelt.

Nachfolgend wird die Funktionsweise einer beispielhaften GCS-Anlage mit Wasser als Fluid beschrieben. Es versteht sich jedoch, dass jede andere geeignete Flüssigkeit verwendet werden kann.

Zur Energiegewinnung aus dem Wasserauftrieb muss ein Schwimmkörper erst ins Wasser getaucht werden. Das kostet mindestens soviel Energie, wie dann durch den Auftrieb des Schwimmkörpers erzielt werden kann. Ein durch Wasser aufgetriebener Schwimmkörper kommt auf herkömmliche Weise über eine Teilrotation nicht hinaus. Wegen seiner niedrigeren Dichte wird der - an einer Achse gelagerte - Schwimmkörper nach Erreichen des Kreisgipfelpunktes weiterhin vom Wasser nur nach oben gedrückt. Dadurch bleibt ein versuchter Achsenantrieb erfolglos. Zudem besteht der Auftrieb eines Schwimmkörpers im Wasser nur solange, als das Gefälle Bestand hat. Damit steht außer Frage, dass aus einem bloßen Wasserauftrieb auf herkömmliche Weise keine Energie zu gewinnen ist. Der beträchtliche Wasserauftrieb, der durch ein bielementares Gefälle ausgelöst werden kann, wird wohl aus diesem Grund bisher nur einen simplen Einsatz gefunden haben.

Theoretisch gesehen könnte dennoch, beim Vorliegen entsprechender Voraussetzungen, durch eine state-by-state Wiederholung des Auftriebs, der zum Eintauchen eines Schwimmkörpers entstandene Aufwand übertroffen und daraus Nutzenergie gewonnen werden.

Eine denkbare Wiederholung des Auftriebs setzt voraus, dass die erforderlichen Rahmenbedingungen zur Rückführung des Schwimmkörpers in seine Ausgangsposition bereits in der Entstehungsphase des Auftriebes integriert sein müssen. Die Lösung dieser komplexen Aufgabe konstituiert das nachfolgend dargelegte GCS Konzept gemäß einer Ausführungsform der hierin offenbarten Gegenstände und die Entwicklung einer danach funktionierenden Anlage.

Der Auftrieb eines Schwimmkörpers im Wasser ist vom Densitätsgefälle abhängig (Gefälleprinzip, Archimedes). Dieses löst sich beim Erreichen der Wasseroberfläche durch einen Schwimmkörper. Daraus folgt:

1. Um das Gefälle zum Wasser zu erhalten, muss die Auftriebsroute eines einmal ins Wasser getauchten Schwimmkörpers vollständig unterhalb der Wasseroberfläche verlaufen.

2. Zudem muss der Schwimmkörper nach Ende eines jeden Auftriebslaufs wieder zum Ausgangspunkt zurückgeführt werden.

3. Entscheidend dabei ist, dass die Rückführung des Schwimmkörpers in die Ausgangsposition nicht zu einer negativen Energiebilanz führen darf.

Die Erfüllung der letztgenannten Bedingung 1 erfordert, dass die Anlage unter Wasser betrieben wird. Daraus ergibt sich die Notwendigkeit zum Einsatz einer Wasserkammer, deren Tiefe größer ist als der Durchmesser des Auftriebskreises. Dadurch kann dieser auf Dauer unterhalb der Oberfläche des Wassers verlaufen, wenn seine Position in der Wasserkammer unverändert bleibt. Dies lässt sich durch die Befestigung der Anlage am Boden der Wasserkammer gewährleisten. Dadurch ist sichergestellt, dass das Gefälle erhalten bleibt.

Da das Endziel der Anlage die Herstellung einer Rotation ist, muss die vertikale Wasserauftriebsbewegung über eine Achse in eine Drehung umgewandelt werden. Für einen Schwimmer mit einer geometrischen Form, die homogen und symmetrisch ist, gelten gemäß einer Ausführungsform folgende Bestimmungen.

Der Auftrieb eines an eine Achse gelagerten Schwimmers (Schwimmkörpers) findet zwischen $(-n/2 + \alpha)$ und

+n/ 2-α statt, also ist der Drehwinkel

$$п - (2α), \qquad (1)$$

wobei (α) der -achsenseitige- Halbwinkel des Schwimmers ist.

Bei Einsatz von zwei Schwimmern, die an die zentrale Achse der Anlage gelagert sind und den Wasserauftrieb gegenläufig erfahren, beträgt der Drehwinkel

$$2x(+п/ 2- 2α -(-п/ 2 + 2α)) = 2п - (4α), \text{ wobei } α \le п/ 4 \text{ (siehe}$$
$$\text{unten) } 2п - (4α) > п - (2α) \qquad (2)$$

Zur Funktion des Hauptkorpus gehört, sich bei jedem Betriebszyklus gänzlich um 180° zu drehen. Durch die Form eines Zylinders wurde ihm die Eigenschaft verliehen, bei seinen Drehungen die Reibungsverluste klein zu halten.

Als Bestandteil des Hauptkorpus wurde der periphere Schwimmerabriss an die Abrundung des Zylinders angepasst. Dementsprechend ist der Faktor $\sin(2α)$ ein Beiwert der durch den Auftrieb eines Schwimmers geleisteten Drehmomentarbeit. Um die Arbeitsleistung zu maximieren, muss $(\sin(2α))=1$ sein. Daraus folgt $(2α) = п/ 2$, wodurch dann auch fest steht, dass Drehwinkel(2) > Drehwinkel(1).

Mit Rücksicht auf diese Erkenntnisse werden zwei Schwimmer als Antriebselement der Anlage eingesetzt, die gegenläufig an die Achse gelagert sind und die Form eines Viertel-Zylinders besitzen. Der Einsatz von zwei Schwimmern ist auch in späteren Entwicklungsstufen von Vorteil.

Die Rückführung der Schwimmer in die Ausgangsposition ist zwar keine technische Herausforderung, doch die Schwimmer einfach über ihre Auftriebsroute wieder zurückzuführen führt zu einer negativen Energiebilanz. Es müssen daher Zusatzmaßnahmen ergriffen werden, die der Entstehung des Energieaufwands entgegenwirken können.

Zur Energieeinsparung wird nach dem Gegengewichtprinzip ein gleichwertiges Gegengewicht für den leistungstragenden Teil eingesetzt. Das Gegengewicht sorgt für einen Schwerkraftausgleich, der den leistungstragenden Teil in Schwebezustand versetzt (ähnlich Gegengewichten bei einer Hebeeinrichtung wie einer Zugbrücke oder einem Personenaufzug).

Während die Leistung einer Hebeeinrichtung in der Hebung der Lasten liegt, wobei es die Schwerkraft zu überwinden gilt, werden die Schwimmer durch die Schwerkraftdifferenz aufgetrieben. Es ist eben diese Schwerkraftdifferenz zum Wasser, die es bei der Rückführung der Schwimmer zu überwinden gilt. Mit anderen Worten muss hier eine der Auftriebskraft der Schwimmer gleichwertige Ausgleichskraft geschaffen werden, also ein Gegenauftrieb. Ein Auftriebsausgleich für die Schwimmer entsteht durch ein den Schwimmern gleichwertiges Volumenelement. Damit dem Auftrieb der Schwimmer aber nicht entgegengewirkt wird, muss das Volumenelement die Flexibilität besitzen, sich in Anpassung an den Schwimmerauftrieb umbauen zu lassen. Der Zugriff auf systemexterne Technologie zur Lösung dieser Aufgabe ist aus Gründen der einzuhaltenden Energieaufwandgrenzen nicht zweckdienlich. Die Lösung musste daher innerhalb der bestehenden Gestaltungsmöglichkeiten im Wasser kreiert werden.

Zur Lösung dieser komplexen Aufgabe wurde ein zylinderförmiger Luftsack entwickelt. Mit Rücksicht auf die sich durch Bestehen von zwei Schwimmern anbietenden Möglichkeiten wurde der Luftsack aus vier Kammern mit einer deformierbaren Haut konstruiert, wobei jede der Kammern dasselbe Gewicht und ein beinahe gleich großes Volumen hat wie ein Schwimmer. Die Aufteilung des Luftsacks in vier Kammern bringt im Übrigen auch bei der Kontinuität der Funktionsfähigkeit des Luftsacks Vorteile. Der Luftsack wird zur Hälfte mit Luft befüllt. Durch die Unterbringung der Schwimmer im Luftsack wird die Hälfte seines Volumens komprimiert. Die gesamte Luft befindet sich dann in der anderen Hälfte, die den Schwimmern, als ein gleichwertiges Volumenelement, gegenüber stehen wird. Aus der Gesamtheit des Luftsacks und der Schwimmer entsteht der Hauptkorpus der Anlage.

Die Schwimmer stehen zum Betriebsbeginn unten und zwei Kammern des Luftsacks sind zwischen ihnen komprimiert. Die anderen beiden Kammern stehen ausgedehnt mit Luft oberhalb der Schwimmer. Durch den Auftrieb der Schwimmer müssen die oberen Kammern komprimiert werden. Dadurch stellen sich folgende Aufgaben:

1. Es wird ein anderer Raum benötigt, in den der Luftinhalt der oberen Kammern überführt wird.

2. Der Kraftaufwand zur Luftüberführung muss gedeckt sein.

Um diesen Anforderungen gerecht zu werden, wurde im Zentrum des Luftsacks ein Durchlassraum untergebracht, der als eine Luftschleuse dient. Durch die Schleuse kann die Luft zwischen den Kammern fließen. Nach dem Expansions-Prinzip breitet sich die Luft in jedem verfügbaren Raum gleichmäßig aus, um den Druck zu mindern. Demgemäß kann der Luftinhalt der oberen Kammern, das erforderliche Kräfteverhältnis vorausgesetzt, durch die Schleuse in die unteren überführt werden.

Was die Kraft angeht, so erfahren die Kammern - als selbständig bewegliche Segmente des Hauptkorpus Wasserkräfte. Der Wasserdruck fällt in einer Gesamttiefe des Hauptkorpus von 1 m auf die unteren Luftkammern dreimal so groß aus wie auf die oberen. Dabei befindet sich die obere Deckfläche der Oberen Luftkammern in einer Tiefe von fasst null und ihre Grundfläche in einer Tiefe von 0,5 m. Somit ergibt sich eine Durchschnittstiefe von 0,25 m. Die Wassertiefe beträgt bei den unteren Kammern dagegen 0,5 m an der oberen Deckfläche und 1 m bei der Grundfläche, was einem Durchschnitt von 0,75 m entspricht. Bei identischer Außenfläche bei den oberen und unteren Kammern führt diese Druckdifferenz dazu, dass die Wasserkraft auf die unteren Kammern mit 0.75gpA dreimal so groß ist wie auf die oberen Kammern mit 0,25gpA. Hierbei ist g die Erdbeschleunigung, ρ die Dichte und A die betreffende Fläche. Dieser Kraftunterschied verhindert den Lufttransfer aus den oberen in die unteren Kammern und dadurch auch das Erreichen der konzipierten Endposition durch die Schwimmer. Um dieses Problem zu umgehen, werden folgende Maßnahmen ergriffen:

Als erstes werden die sich gegenüberliegenden Seiten (Flächen) der unteren Kammern durch einen weiter unten beschriebenen Gabel-Mechanismus während des Schwimmerauftriebs arretiert gehalten. Dadurch wird der Wasserdruck auf diese Seiten abgewehrt. Er wird dann vielmehr vom Gabel-Mechanismus getragen, der am Gestell installiert ist.

In einem zweiten Schritt wird ein komplexer, eigens für diesen Zweck entwickelter Mechanismus aus festen und flexiblen Elementen, wobei die flexiblen Elemente an den Rand der Kammern befestigt sind und sich teilweise durch eine feste Führung bewegen und dadurch Rigidität annehmen können, zur Stramm-Ziehung der Haut der unten stehenden Kammern eingesetzt, deren Gewicht ebenso vom Gestell getragen wird. Durch diesen Mechanismus wird die Außenfläche der Kammern stramm gehalten solange sie sich in der unteren Position befinden. Der Wasserdruck wird dann an der Kammeraußenfläche abgewehrt und an den Stramm-Ziehungsmechanismus übergeleitet.

Die Wirkung des Wasserdrucks wird bleibt durch diesen Mechanismus fern, während die oben stehenden Kammern die Wasserkraft in vollem Umfang erfahren. Sie werden dadurch komprimiert und drücken die Luft durch die Luftschleuse nach unten.

Die in die unteren Kammern hineinfließende Luft führt zu ihrer Inflation. Die Inflation findet dadurch statt, dass sich die den Schwimmern gegenüberliegenden Seiten (Flächen) der unteren Kammern aus ihrer senkrechten Position in einer Durchschnitttiefe von 0,75 m in die Waagerechte der Tiefe 0,5 m drehen. Dabei muss die auf sie wirkende Wasserkraft überwunden werden.

Angesichts eines Komrimierungseffekt-bereinigten Multiplikationsproduktes der Flächen- und Tiefenwerte der oberen Kammern, das 1,7 mal größer ausfällt als das der betroffenen Fläche der unteren Kammern, entsteht eine beträchtliche Überkraft auf der Seite der oberen Kammern, wodurch die Luft in die unteren Luftkammern gedrückt wird. Kraftaufwand für den Lufttransfer wird daher durch die auf die Kammern selbst wirkenden Wasserkräfte gedeckt.

Am Ende des Auftriebes stehen beide Schwimmer oben. Zwischen ihnen liegen zwei komprimierte Luftkammern. In der unteren Hälfte des Hauptkorpus befinden sich zwei mit Luft befüllte Luftkammern.

Am Ende eines Drehzyklus werden die zu Beginn oben gestandenen Kammern ihre Position mit den unten gestandenen gewechselt haben. Dadurch wird jedoch die Funktion des Luftsacks nicht gestört, da mit dem Positionswechsel auch ein Funktionswechsel zwischen den Kammern stattfindet. Die Folge ist, dass die Kammern jeweils beim nächsten Zyklus die Funktion der jeweils anderen Kammern erfüllen, die sie ersetzt haben. Dass dies möglich ist, begründet sich durch den Aufbau des Luftsacks. Der Luftsack ist homogen und symmetrisch. Zudem wird die Funktionsfähigkeit seiner vier Luftkammern durch den Betrieb nicht verändert und nicht beeinträchtigt. Zu jeder Zeit stehen den zwei Kammern oben auch zwei ihnen identische Kammern unten gegenüber. Die oberen und die unteren Kammern können dadurch wechselartig dieselbe Funktion bei den kontinuierlich aufeinander folgenden Rotationszyklen erfüllen.

Der Hauptkorpus ergibt sich aus einer Kombination aus vier Luftkammern und zwei Schwimmern. Die Masse eines Schwimmers darf als gleichwertig zu der einer Kammer behandelt werden. In Ruhelage befinden sich zwei Kammern oberhalb der horizontalen Mittellinie des Hauptkorpus und zwei darunter. In ihrer Ausgangsposition stehen die Schwimmer unten nebeneinander und die zwei unteren Kammern sind zwischen ihnen komprimiert. Die geringfügige Luftmasse ignoriert, befindet sich damit unten zweimal so viel Masse wie oben, weshalb auch der Schwerpunkt in der unteren Hälfte des Hauptkorpus liegt.

Da sich die Schwimmer durch Wasser von unten nach oben auftreiben lassen, bewegt sich mit Ihnen auch der Schwerpunkt des Hauptkorpus. Durch die Bewegung der Schwimmer nach oben entwickelt sich ein zunehmendes Potential zur Verlagerung des Schwerpunktes in die obere Hälfte des Hauptkorpus, dessen Höchstwert am Ende des Schwimmerauftriebs erreicht wird.

Der Hauptkorpus droht umzukippen, sobald der Schwerpunkt in seine obere Hälfte gelangt. Dies geschieht durch die Überschreitung der horizontalen Mittellinie des Hauptkorpus durch die Schwimmer, also nach Ablauf des halben Auftriebslaufwegs und dadurch deutlich bevor die Schwimmer ihre Endposition erreicht haben. Das Anlagenkonzept könnte aber in einer Ausführungsform nur dann aufgehen, wenn die Schwimmer bis zu ihrer Endposition aufgetrieben würden. Dadurch werden zwei Ziele verfolgt:

1. Die Auftriebsleistung der Schwimmer wird vollständig erbracht.

2. Durch eine Halbkreisdrehung des Hauptkorpus können dann die Schwimmer in ihre Ausgangsposition zurückgeführt werden.

Durch Umkippen des Hauptkorpus mitten im Auftrieb der Schwimmer wären beide Vorhaben gescheitert. Der Betrieb wäre damit beendet. Um dies zu vermeiden, müsste verhindert werden, dass der Hauptkorpus trotz unausgeglichener Schwerkraftwirkung stabil bleibt, dies jedoch ohne dabei andere Belange der Funktion zu benachteiligen.
Zu diesem Zweck wurde ein komplementärer Mechanismus entwickelt, der nachfolgend als Gabelmechanismus bezeichnet wird. Der Gabelmechanismus wurde konzipiert, um den Hauptkorpus bis Ende des Auftriebs der Schwimmer arretiert und dadurch stabil zu halten.
Am Ende Ihres Auftriebslaufs stehen die Schwimmer an einem Punkt, der genau das vertikale Gegenteil ihrer Ausgangsposition darstellt. Daher werden sie durch eine 180° Drehung wieder in ihre Ausgangsposition zurückkehren.
Durch den Gabelmechanismus wird erreicht, dass sich das Schwerkraftpotential bis zum Ende des Schwimmerauftriebs summiert, jedoch zurückgehalten wird. Dieses Potential wird erst danach freigegeben und zu einer Drehung des Hauptkorpus aktiviert.
Eine Halbkreisdrehung würde jedoch nur dann vollzogen werden, wenn sich der Schwerpunkt während der Drehung nicht verschöbe. Durch Wasserdruck würden sich die Schwimmer jedoch mitten in der Drehung des Hauptkorpus von einander trennen. Die Luft würde teilweise aus den unteren in die oberen Kammern fließen bis ein neues Gleichgewicht zustande käme. Dies würde dazu führen, dass die Schwimmer ihre Ausgansposition doch nicht erreichten.
Zur Lösung dieses Problems wurde ein Schließmechanismus eingesetzt, um die Schwimmer während der Halbkreisdrehung des Hauptkorpus miteinander verriegelt zu halten. Dadurch wird die Gefahr einer Verschiebung des Schwerpunkts ausgeräumt. Die Halbkreisdrehung des Hauptkorpus kann somit vollendet werden, wodurch die Schwimmer wieder in ihre Ausgangsposition versetzt werden.
Damit die Drehung des Hauptkorpus nicht über 180° hinausgeht, wurde im Konzept des Gabelmechanismus gemäß einer Ausführungsform die Funktion eingeschlossen, auf die untere Hälfte des Hauptkorpus, die sich im Zuge der Drehung auf dem Weg nach oben befindet, vorzeitig zuzugreifen, um den Hauptkorpus exakt bei 180° Drehung anzuhalten. Im Konzept des Schließmechanismus ist vorgesehen, dass er sich ebenso bei exakt 180° Drehung des Hauptkorpus auflöst. Damit sind die Voraussetzungen zur Wiederholung des Auftriebs erfüllt.
Gemäß einem zweiten Aspekt der hierin offenbarten Gegenstände wird ein Verfahren zum Betreiben eines Motors gemäß dem ersten Aspekt oder einer Ausführungsform davon bereitgestellt, das Verfahren enthaltend: Räumlich Fixieren der Zykliereinheit in der Ausgangsposition; Anschließend Freigeben des Schwimmkörpers in der unteren Position, um dem Schwimmkörper so zu erlauben, die Aufwärtsbewegung zu der oberen Position durchzuführen und dabei das Antriebselement anzutreiben; mit dem Schwimmkörper in der oberen Position, Überführen der Zykliereinheit den einen verriegelten Zustand, in welchem der Schwimmkörper bezüglich der Zykliereinheit räumlich fixiert ist; und Freigeben der Zykliereinheit, um so der Zykliereinheit zu erlauben, sich in die Ausgangsposition zu bewegen, in welcher der Schwimmkörper in der unteren Position ist.
Gemäß einer Ausführungsform enthält das Verfahren das Bereitstellen von Steuersignalen für Aktoren, um die hierin beschriebenen Aktionen, beispielsweise das räumliche Fixieren der Zykliereinheit, das Freigeben des Schwimmkörpers, das Freigeben der Zykliereinheit, das Fixieren des Schwimmkörpers bezüglich der Fixiereinheit; etc., zu bewirken.
Gemäß einem dritten Aspekt der hierin offenbarten Gegenstände wird ein Computerprogramm bereitgestellt zum Bereitstellen eines physikalischen Objektes, nämlich eines Steuersignals, wobei das Computerprogramm angepasst ist, um, wenn es durch eine Prozessorvorrichtung ausgeführt wird, das Verfahren gemäß dem zweiten Aspekt oder einer Ausführungsform davon durchzuführen.
Im Folgenden werden exemplarische Ausführungsformen der hierin offenbarten Gegenstände beschrieben, wobei beispielsweise auf einen Motor oder ein Verfahren zum Betreiben eines Motors Bezug genommen wird. Es sollte hervorgehoben werden, dass jede Kombination von Merkmalen verschiedener Aspekte, Ausführungsformen und Beispiele, wie sie hierin offenbart sind, möglich ist. Insbesondere werden einige Ausführungsformen mit Bezug auf ein Verfahren beschrieben, während andere Ausführungsformen mit Bezug auf eine Vorrichtung beschrieben werden. Wiederum andere Ausführungsformen werden mit Bezug auf Aktoren beschrieben, die Funktionen des Motors oder Schritte gemäß dem Verfahren steuern. Jedoch wird der Fachmann der vorstehenden und der nachfolgenden Beschreibung, den Ansprüchen und den Zeichnungen entnehmen, dass, solange es nicht anders angegeben ist, Merkmale verschiedener Aspekte, Ausführungsformen und Beispiele beliebig kombinierbar sind. Zum Beispiel ist ein Merkmal, welches sich auf ein Verfahren bezieht, mit einem Merkmal kombinierbar, welches sich auf eine Vorrichtung bezieht. Wie hierin verwendet, ist die Bezugnahme auf ein Computerprogramm beabsichtigt, äquivalent zu sein zu einer Bezugnahme auf ein Programmelement und/oder ein computerlesbares Medium, welches Instruktionen zum Steuern eines Computersystems oder einer Prozessorvorrichtung aufweist, um die Durchführung von hierin beschriebenen Verfahren zu bewirken und/oder zu koordinieren.

Das Computerprogramm kann implementiert sein als computerlesbarer Instruktionscode unter Verwendung von jeder geeigneten Programmiersprache, wie beispielsweise JAVA, C++, und kann gespeichert sein auf einem computerlesbaren Medium (z.B. entfernbare Platte, flüchtiger oder nichtflüchtiger Speicher, eingebetteter (embedded) Speicher/Prozessor, etc.). Der Instruktionscode ist ausführbar, um einen Computer oder irgendeine andere programmierbare Vorrichtung zu programmieren, zum Ausführen der gewünschten Funktionen, wie sie hierin beschrieben sind. Das Computerprogramm kann auf einem Netzwerk verfügbar sein, wie beispielsweise dem WorldWideWeb, von welchem es heruntergeladen werden kann.

Gegenstände und Merkmale, wie sie hierin offenbart werden, können realisiert sein mittels eines Computerprogramms, respektive Software. Ferner können Gegenstände und Merkmale, wie sie hierin beschrieben sind, mittels einem oder mehreren spezifischen elektronischen Schaltungen, respektive Hardware, realisiert sein. Ferner können Gegenstände und Merkmale, wie sie hierin offenbart sind, in einer Hybridform, d.h. in einer Kombination von Softwaremodulen und Hardwaremodulen realisiert sein.

Die oben definierten Aspekte und Ausführungsformen und weitere Aspekte und Ausführungsformen der vorliegenden Erfindung werden ersichtlich von den hierin nachfolgend beschriebenen Beispielen und werden erläutert mit Bezug auf die Zeichnungen, auf welche die Erfindung jedoch nicht beschränkt ist.

KURZE BESCHREIBUNG DER ZEICHNUNGEN

Fig. 1 zeigt eine Stirnansicht eines deformierbaren Elements gemäß Ausführungsformen der hierin offenbarten Gegenstände.

Fig. 2 zeigt das deformierbare Element aus Fig. 1, welches zur Hälfte einem Füllmedium gefüllt ist.

Fig. 3 zeigt zwei Schwimmkörper gemäß Ausführungsformen der hierin offenbarten Gegenstände.

Fig. 4 zeigt das komprimierbare Element in der Konfiguration aus Fig. 2 zusammen mit den beiden Schwimmkörpern, wie sie in Fig. 3 dargestellt sind in einem Motor gemäß Ausführungsformen der hierin offenbarten Gegenstände.

Fig. 5 zeigt eine Teilansicht des Motors aus Fig. 4 gemäß Ausführungsformen der hierin offenbarten Gegenstände.

Fig. 6 zeigt das deformierbare Element in einer Ausgangsposition der Zykliereinheit gemäß Ausführungsformen der hierin offenbarten Gegenstände

Fig. 7 zeigt den Motor und insbesondere das deformierbare Element in dem in Fig. 6 dargestellten Zustand zusammen mit zwei Schwimmkörpern.

Fig. 8 zeigt den Motor aus Fig. 7 dargestellten Zustand, in welchem sich die Schwimmkörper in ihrer oberen Position befinden

Fig. 9 zeigt den Motor aus Fig. 7 nach dem erneuten Einnehmen der Ausgangsposition.

Fig. 10 zeigt einen Teil des Motors aus Fig. 4 gemäß Ausführungsformen der hierein offenbarten Gegenstände.

DETAILLIERTE BESCHREIBUNG

Die Darstellung in den Zeichnungen ist schematisch. Es wird angemerkt, dass in verschiedenen Figuren ähnliche oder identische Elemente oder Komponenten mit denselben Bezugszahlen versehen sind, oder mit Bezugszahlen, die sich nur in der ersten Ziffer oder einem angehängten Buchstaben unterscheiden. Solche Merkmale und Komponenten, die mit den entsprechenden Merkmalen bzw. Komponenten in einer anderen Figur gleich oder zumindest funktionsgleich sind, werden nur bei ihrem ersten Auftreten in dem nachfolgenden Text detailliert beschrieben und die Beschreibung wird bei einem nachfolgenden Auftreten dieser Merkmale und Komponenten (bzw. der entsprechenden Bezugszahlen) nicht wiederholt. In einigen Figuren sind Elemente zur übersichtlicheren Darstellung weggelassen. Folglich bedeutet ein Fehlen eines Elementes in einer Figur nicht, dass das Element tatsächlich nicht vorhanden ist.

Nachfolgend wird mit Bezug auf die Zeichnungen ein Motor gemäß Ausführungsformen der hierin offenbarten Gegenstände beschrieben. Hierzu werden einzelne Elemente des Motors in ihrer Ausgestaltung und Funktion beschrieben und hieran anschließend das Zusammenwirken dieser Elemente gemäß anschaulichen Ausführungsformen der hierin offenbarten Gegenstände.

Wie vorstehend erläutert, basiert der Motor gemäß Ausführungsformen der hierin offenbarten Gegenstände auf der Verwendung einer hydrostatischen Kraft zur Erzeugung eines aufgrund einer Verlagerung des Schwerpunkts einer Zykliereinheit sich zyklusmäßig wiederholenden Drehmoments.

Der Motor enthält hierzu ein Antriebselement und eine Zykliereinheit, wobei die Zykliereinheit gemäß einer Ausführungsform ein deformierbares Element aufweist. Gemäß einer Ausführungsform kann für zwei oder mehr Zykliereinheiten ein gemeinsames deformierbares Element vorgesehen sein.

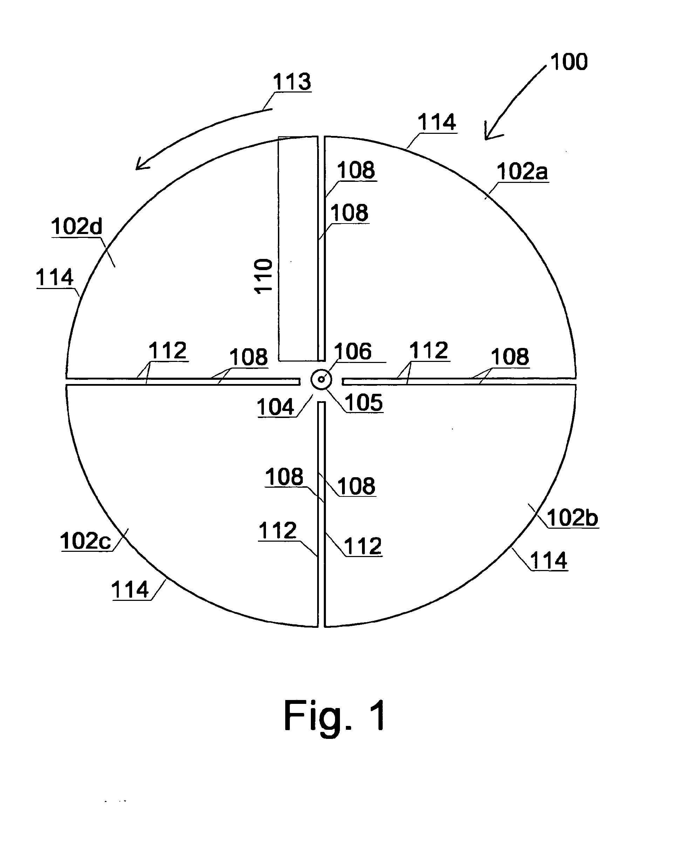

Fig. 1 zeigt eine Stirnansicht eines deformierbaren Elements gemäß Ausführungsformen der hierin offenbarten Gegenstände. Gemäß einer Ausführungsform ist das deformierbare Element ein komprimierbares Element. Das deformierbare Element 100 besteht in einer Ausführungsform aus einem sich zylinderförmig erstreckenden Ballon, wobei der Ballon zwei oder mehr Flügel aufweisen kann. Wie in Fig. 1 dargestellt, weist der Ballon 100 vier Segmente 102a, 102b, 102c, 102d auf, die einen kreissegmentförmigen Querschnitt haben und über einen Zentralbereich 104 strömungsmäßig miteinander verbunden sind, so dass ein Füllmedium 103, beispielsweise Luft, von jedem der Segmente 102a-102d über den Zentralbereich 104 in ein anderes der Segmente strömen kann. Der Zentralbereich 104 weist ferner ein Durchgangsloch 105 auf durch welches sich ein Antriebselement des Motors (in Fig. 1 nicht dargestellt) hindurch erstrecken kann. Die vier Segmente oder Flügel 102a, 102b, 102c, 102d bilden dadurch einen geschlossenen Zylinderkörper, wobei sich eine Achse 106 des Zylinderkörpers sich senkrecht zu der Zeichenebene erstreckt und eine axiale Richtung definiert.

Jedes der Segmente 102a, 102b, 102c, 102d weist Seitenwände auf, die sich in der axialer Richtung erstrecken, und die Segmente in Umfangsrichtung zumindest in einem radial äußeren Bereich 110 voneinander trennen. Gemäß einer Ausführungsform enthält das deformierbare Element 100 eine Stützvorrichtung, welche die Deformierbarkeit des deformierbaren Elements definiert. Beispielsweise kann vorgesehen sein, dass das deformierbare Element in Umfangsrichtung 113 deformierbar ist, in radialer Richtung bezüglich der Achse 106 jedoch in seinen Abmessungen fixiert ist. Die Stützvorrichtung kann beispielsweise Rahmenstangen aufweisen, welche in einer Ausführungsform die Seitenwände 108 aufgespannt halten, während sie eine Bewegung der Seitenwände 108 relativ zueinander ermöglichen. Die Rahmenstangen erstrecken sich gemäß einer Ausführungsform bezüglich der Achse 106 in radialer Richtung. In Fig. 1 sind die Rahmenstangen allgemein mit 112 bezeichnet.

Gemäß einer Ausführungsform sind die Rahmenstangen 112 lediglich im Bereich der Seitenwände 108 angeordnet. Gemäß anderen Ausführungsformen können auch weitere Rahmenstangen vorgesehen sein, die zwischen den Seitenwänden 108 angeordnet sind und sich in der radialen Richtung erstrecken (nicht dargestellt).

Wie erläutert, sorgen die Rahmenstangen 112 gemäß einer Ausführungsform für eine Formstabilität der Seitenwände 108. Dadurch wird eine in der Umfangsrichtung 113 sich erstreckende Außenwand 114 jedes Segments in Form gehalten. Die weiteren, nicht dargestellten Rahmenstangen zwischen den Seitenwänden 108 können gemäß einer Ausführungsform ausgebildet sein, um die Formstabilität eines Segments 102a, 102b, 102c, 102d, und insbesondere die Formstabilität der Seitenwand 114 oder einer stirnseitigen Wand zu erhöhen.

Gemäß einer Ausführungsform des deformierbaren Elements 100 sind die Seitenwände 108 und die Außenwand 114, sowie in Fig. 1 nicht dargestellte stirnseitige Wand des deformierbaren Elements aus einem flexiblen, das heißt biegbaren Material hergestellt, zum Beispiel einer Folie. Gemäß einer Ausführungsform ist die Folie in einer Folienebene nur gering oder nicht elastisch, sondern lediglich quer zu der Folienebene biegbar, ohne die Folie hierbei elastisch zu verformen. Zum Beispiel kann die Folie eine faserverstärkte oder eine gewebeverstärkte Folie sein.

In Fig. 1 ist das deformierbare Element 100 in Form des viersegmentigen Ballons vollständig mit Luft gefüllt, um eine Erläuterung der Konfiguration des deformierbaren Elements 100 zu erleichtern. Gemäß einer Ausführungsform der hierin offenbarten Gegenstände ist das deformierbare Element jedoch nur teilweise mit einem Füllmedium 103 gefüllt. Zum Beispiel ist gemäß einer Ausführungsform das deformierbare Element 100 zur Hälfte mit einem Füllmedium 103 wie beispielsweise Luft gefüllt.

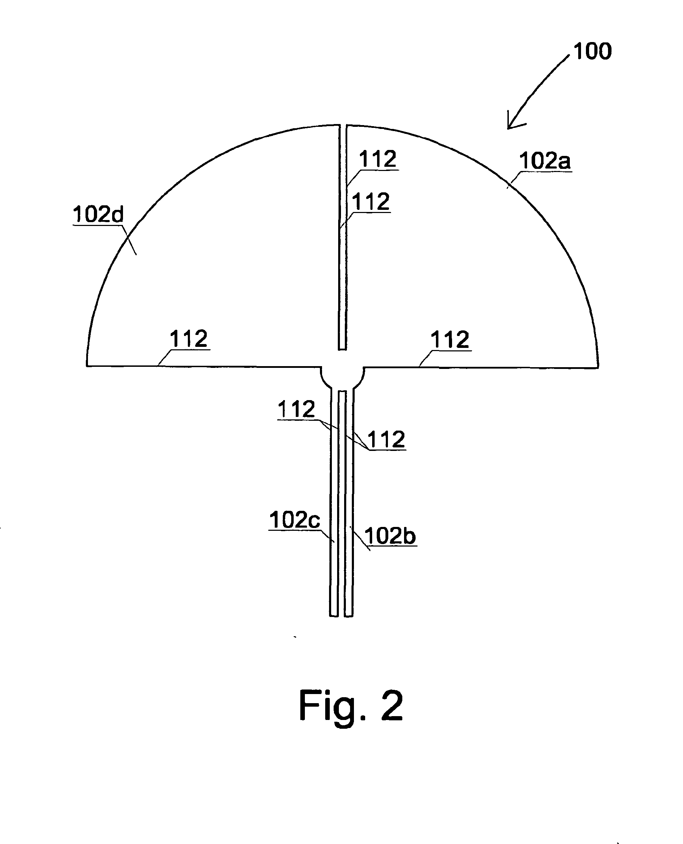

Fig. 2 zeigt das deformierbare Element 100 aus Fig. 1, welches zur Hälfte mit Luft als Füllmedium 103 gefüllt ist. Dies erlaubt eine Konfiguration des deformierbaren Elements 100, in welcher die beiden oberen Segmente 102a und 102d in Fig. 2 vollständig mit dem Füllmedium 103 gefüllt sind, während die beiden unteren Segmente 102b, 102c vollständig entleert sind. Die in Fig. 2 dargestellte Konfiguration des deformierbaren Elements 100 kann erreicht werden, indem durch Komprimierung der unteren Segmente 102b, 102c, deren Luftgehalt in die oberen Segmente 102a, 102d fließt, so dass sich die oberen Segmente 102a, 102d zum vollen Volumen ausdehnen. Die umgekehrte Konfiguration ist ebenfalls möglich. In einer exemplarischen Ausführungsform ist das deformierbare Element ein Luftballon. In diesem Fall können die Segmente als Luftballonflügel bezeichnet werden.

Die Segmente 102a, 102b, 102c, 102d des deformierbaren Elements 100 werden durch die Rahmenstangen 112, die sich in einer Ausführungsform entlang von radialen Rändern der Segmente erstrecken, unterstützt und geführt.

In einer exemplarischen Ausführungsform hat ein komprimiertes Segment 102a, 102b, 102c, 102d des deformierbaren Elements 100 ohne Luftgehalt (komprimierter Luftballonflügel, KLBF) eine durchschnittliche Dichte von $\rho_{KLBF}$ = 4000 kg/m$^3$. Das heißt ein komprimierter Luftballonflügel hat eine Dichte, die höher ist als die Dichte von Wasser (ca. 1000 kg/m$^3$). Im Gegensatz dazu hat ein mit Luft befülltes Segment 102a, 102b, 102c, 102d (FLBF) eine durchschnittliche Dichte von $\rho_{FLBF}$ = 23 kg/m$^3$. Das heißt, das mit Luft befüllte Segment des deformierbaren Elements hat eine geringere Dichte als Wasser.

Gemäß einer weiteren Ausführungsform der hierin offenbarten Gegenstände enthält eine Zykliereinheit einen Schwimmkörper neben dem deformierbaren Element 100.

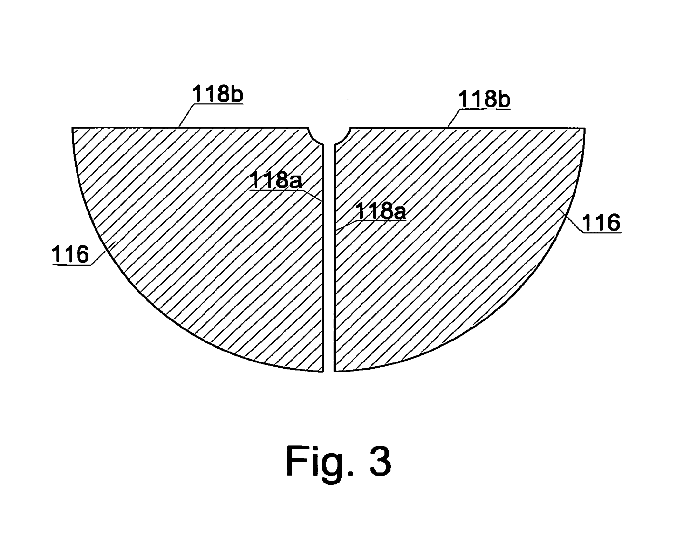

Fig. 3 zeigt zwei Schwimmkörper 116 gemäß Ausführungsformen der hierin offenbarten Gegenstände. Gemäß einer Ausführungsform sind die Schwimmkörper 116 formstabile Schwimmkörper. Beispielsweise können die Schwimmkörper 116 aus einem steifen Material, beispielsweise Kunststoff oder Metall, hergestellt sein. In einer exemplarischen Ausführungsform können die Schwimmkörper 116 aus Plexiglas hergestellt sein.

Gemäß einer Ausführungsform ist jeder Schwimmkörper 116 dimensioniert, so dass er zwischen einem oberen Segment 102a, 102d und einem unteren Segment 102b, 102c des deformierbaren Elements 100 positionierbar ist. Beispielsweise kann der Schwimmkörper 116 einen kreissegmentförmigen Querschnitt aufweisen. Obwohl in Fig. 3 der Querschnitt des Schwimmkörpers 116 ungefähr die Form eines Viertelkreises aufweist, ist dies nur exemplarisch und der Winkelbereich zwischen einer ersten Seitenwand 118a und einer zweiten Seitenwand 118b des Schwimmkörpers 116 ist von 90° verschieden.

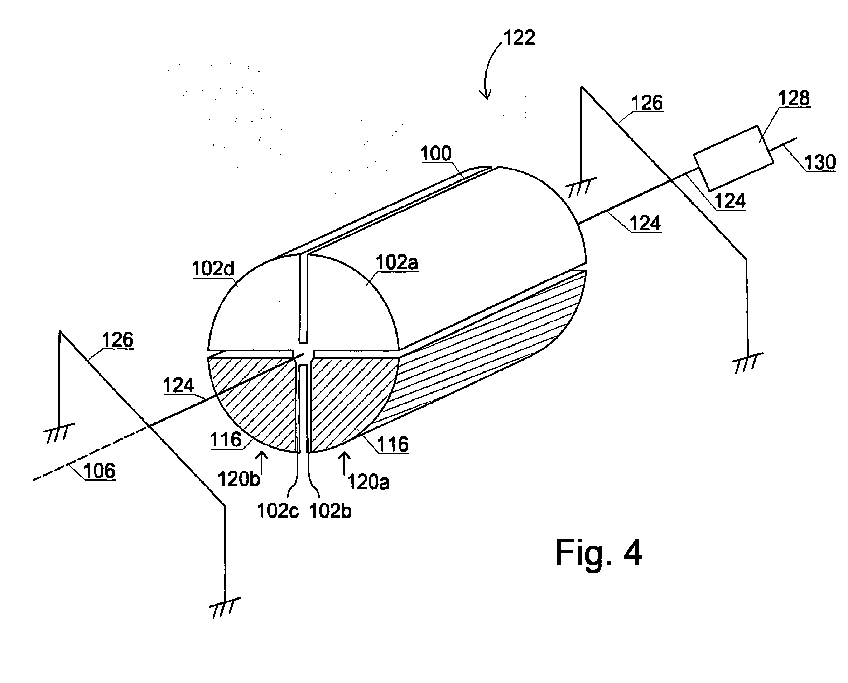

Fig. 4 zeigt nun das komprimierbare Element 100 in der Konfiguration aus Fig. 2 zusammen mit den beiden Schwimmkörpern 116, wie sie in Fig. 3 dargestellt sind in einem Motor 122 gemäß Ausführungsformen der hierin offenbarten Gegenstände.

Gemäß einer Ausführungsform ergänzen sich der Winkelbereich, über den sich der Schwimmkörper 116 erstreckt und der Winkelbereich, über den sich die beiden neben dem Schwimmkörper angeordneten Segmente (102a, 102b; bzw. 102c, 102d) des deformierbaren Elements 100 erstrecken, zu 180 Grad, wie in Fig. 4 dargestellt.

Bei dem in Fig. 4 dargestellten Motor 122 bilden jeweils zwei Segmente 102a und 102b bzw. 102c und 102d des deformierbaren Elements 100 zusammen mit dem dazwischen angeordneten Schwimmkörper 116 eine Zykliereinheit 120a, 120b oder zumindest einen Teil davon.

Gemäß einer Ausführungsform teilen sich zwei oder mehr Zykliereinheiten ein gemeinsames deformierbares Element, wie in Fig. 4 dargestellt.

Jeder Zykliereinheit 120a, 120b ist ein Antriebselement zugeordnet, dargestellt in Fig. 4 durch eine Welleneinheit 124, welche das deformierbare Element 100 sowie die Schwimmkörper 106 trägt. Die Wellenvorrichtung 124 kann auf jede geeignete Weise gelagert sein. Exemplarisch ist die Lagerung der Wellenvorrichtung 124 in Fig. 4 bei 126 dargestellt.

In einer exemplarischen Ausführungsform haben die Schwimmkörper, welche als Hohlkörper mit starren Wänden ausgebildet sein können, eine durchschnittliche Dichte von 106 kg/m$^3$.

Gemäß einer Ausführungsform sind die Segmente des deformierbaren Elements in Umfangsrichtung 113 mit Abstand von den Hohlkörpern 116 angeordnet. Folglich bleiben gemäß einer Ausführungsform offene Fugen zwischen dem deformierbaren Element 100 und den Schwimmkörpern 116. Zur Aufrechterhaltung des Abstands können an den Schwimmkörpern 116 und/oder an dem deformierbaren Element Abstandselemente, wie beispielsweise Vorsprünge oder Verbindungselemente, die den minimalen Abstand zwischen dem Schwimmkörper 116 und dem deformierbaren Element begrenzen, angeordnet sein. Gemäß einer Ausführungsform sind die sich gegenüberliegenden Seitenwände 118a, 118b des Schwimmkörpers 116 und die den Seitenwänden 118a, 118b gegenüberliegenden Seitenwände 112 des deformierbaren Elements 100 aneinander fixiert, beispielsweise durch nicht dargestellte Verbindungselemente. Gemäß einer anderen Ausführungsform sind der Schwimmkörper und das deformierbare Element nicht aneinander fixiert, sondern sind lediglich aneinander angrenzend angeordnet, um bei dem hierin beschriebenen Betrieb des Motors dem jeweiligen Betriebszustand entsprechende Kräfte aufeinander auszuüben.

Gemäß einer Ausführungsform weist der deformierbare Schwimmkörper in seinem Zentralbereich 104 das in Fig. 1 dargestellte Durchgangsloch 105 auf, durch welches sich die Wellenvorrichtung 124 erstreckt.

Gemäß einer Ausführungsform sind die Rahmenstangen 112 des deformierbaren Elements 100 an auf der Wellenvorrichtung 124 drehbar gelagerte Ringe gekoppelt. Die Kopplung der Rahmenstangen 112 an die Ringe ist gemäß einer Ausführungsform derart, so dass sich die Rahmenstangen 112 bezüglich der Ringe in Umfangsrichtung neigen können, um eine Komprimierung des betreffenden Segmentes 102a, 102b, 102c, 102d zu erlauben. Die nicht dargestellten Ringe können auf der Wellenvorrichtung 124 frei drehbar gelagert sein. Gemäß einer Ausführungsform ist jeder Schwimmkörper 116 mittels einer Kopplungsvorrichtung an sein zugeordnetes Antriebselement gekoppelt. Das heißt gemäß einer Ausführungsform erfolgt die Kraftübertragung auf das Antriebselement durch den Schwimmkörper 116. Gemäß einer anderen Ausführungsform sind die Schwimmkörper 116 frei drehbar gelagert und die Kraftübertragung auf das Antriebselement der Zykliereinheit erfolgt durch das deformierbare Element bzw. die Rahmenstangen des deformierbaren Elements.

Gemäß einer Ausführungsform sind die Antriebselemente der beiden Zykliereinheiten 120a, 120b in Form der Wellenvorrichtung 124 in Fig. 4, mit einem Getriebe 128 gekoppelt, wobei das Getriebe 128 eingerichtet ist, um die Bewegung des Antriebselements der ersten Zykliereinheit 120a und die Bewegung des Antriebselements der zweiten Zykliereinheit 120b zu kombinieren. Es versteht sich, dass in solch einem Fall die Wellenvorrichtung 124 zwei separate Wellen aufweisen muss, um die Antriebselemente der beiden Zykliereinheiten 102a, 120b mit dem Getriebe zu koppeln. Beispielsweise enthält die Wellenvorrichtung in einer Ausführungsform zwei koaxial geführte Wellen. Das Getriebe 128 weist eine Abtriebswelle 130 auf, an welcher die von dem Motor 122 erzeugte Kraft bzw. Energie zur Verfügung steht, beispielsweise um einen Generator anzutreiben.

Gemäß einer Ausführungsform kann der Motor 122 zum Antreiben eines Generators und dadurch Erzeugen von elektrischer Energie verwendet werden.

Nach der Beschreibung der strukturellen Merkmale des Motors 122, der im Einklang ist mit exemplarischen Ausführungsformen der hierin offenbarten Gegenstände, wird im Folgenden auf die Funktionsweise des Motors 122 eingegangen.

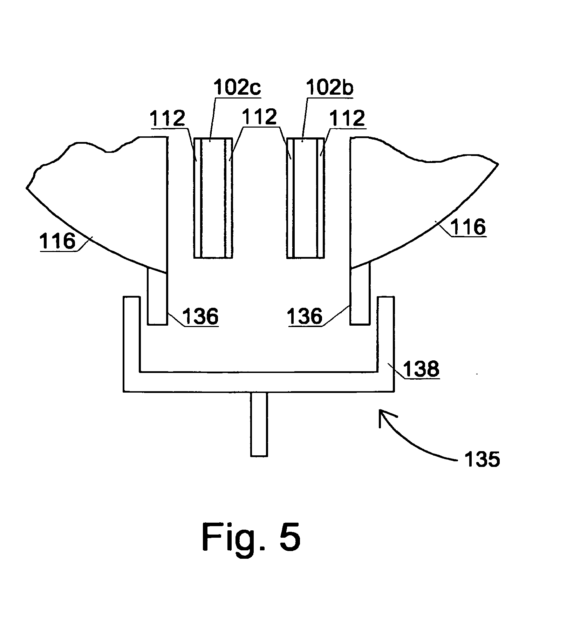

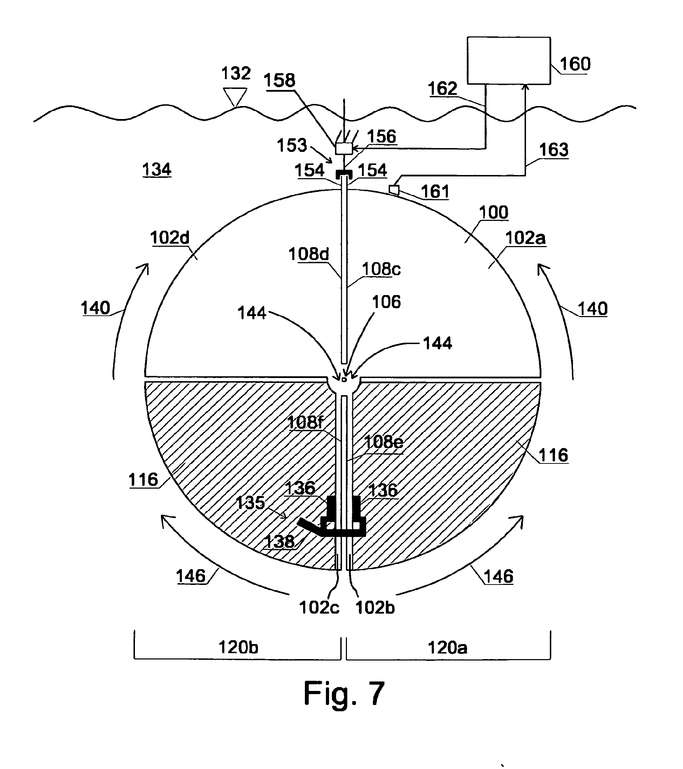

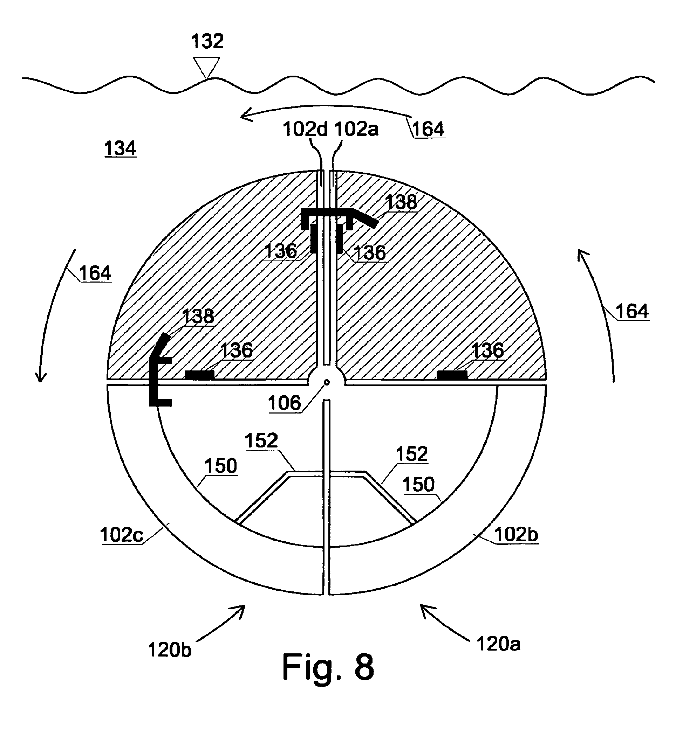

Fig. 5 zeigt eine Teilansicht des Motors 122 aus Fig. 4 gemäß Ausführungsformen der hierin offenbarten Gegenstände. Gemäß einer Ausführungsform enthält der Motor einen ersten Verriegelungsmechanismus 135 zum Verriegeln der Position des Schwimmkörpers 116 relativ zu dem deformierbaren Element 100. Beispielsweise kann bei dem exemplarisch in den Zeichnungen dargestellten Motor 122 der erste Verriegelungsmechanismus 135 an jedem Schwimmkörper 116 ein erstes Verriegelungselement 136 aufweisen, welches mit einem zweiten Verriegelungselement 138 in Eingriff gebracht werden kann, um die Position der beiden Schwimmkörpers 116 relativ zueinander zu fixieren. Da die komprimierten Segmente (Segmente 102b, 102c in dem in Fig. 5 dargestellten Zustand des Motors 122) sich zwischen den Schwimmkörpern 116 befinden, werden durch das Fixieren der beiden Schwimmkörper relativ zueinander auch die zwischen den Schwimmkörpern 116 angeordneten, komprimierten Segmente 102b, 102c ebenfalls relativ zueinander (und auch relativ zu den Schwimmkörpern 116) fixiert. Gemäß einer Ausführungsform ist die Position des Schwimmkörpers relativ zu dem deformierbaren Element verriegelbar sowohl wenn der erste Teil (Segment 102a, 102d) komprimiert ist, als auch wenn der zweite Teil (Segment 102b, 102c) des Schwimmkörpers komprimiert ist. Hierzu können beispielsweise zwei erste Verriegelungsmechanismen 135 vorgesehen sein (wie in Fig. 8 dargestellt), von denen in Fig. 7 zur Vereinfachung der Darstellung jedoch nur einer dargestellt ist.

Der erste Verriegelungmechanismus 135 kann ein bistabiler Mechanismus sein, welcher zwei stabile Zustände einnehmen kann. Damit kann beispielsweise der erste Verriegelungsmechanismus 135 ausgebildet sein, um durch eine erste Betätigung verriegelt zu werden, und um nach dem Überführen der Zykliereinheit in die Ausgangsposition durch eine zweite Betätigung entriegelt zu werden.

Sofern die entfalteten Segmente 102a, 102d nicht elastisch verformbar sind, sind mit der Fixierung der komprimierten Segmente 102b, 102c auch die entfalteten Segmente 102a, 102d fixiert. Zusätzlich kann gemäß einer weiteren Ausführungsform ein weiterer Verriegelungsmechanismus zum aneinander Fixieren der entfalteten Segmente 102a, 102d vorgesehen sein. Dieser weitere, nicht dargestellte Verriegelungsmechanismus kann analog zu dem ersten Verriegelungsmechanismus ausgebildet sein. Insbesondere sind der erste Verriegelungsmechanismus und der weitere Verriegelungsmechanismus Teil des Zyklierelements 120a, 120b und zusammen mit dem Zyklierelement bewegbar (z. B., gemäß exemplarischen in den Zeichnungen dargestellten Ausführungsformen, um die Achse 106 rotierbar).

Wie in Fig. 5 dargestellt, kann das erste Verriegelungselement 136 jeweils aus einem Vorsprung und das zweite Verriegelungselement 138 aus einer Gabel bestehen, welche die Vorsprünge 136 umgreift und dadurch relativ zueinander fixiert.

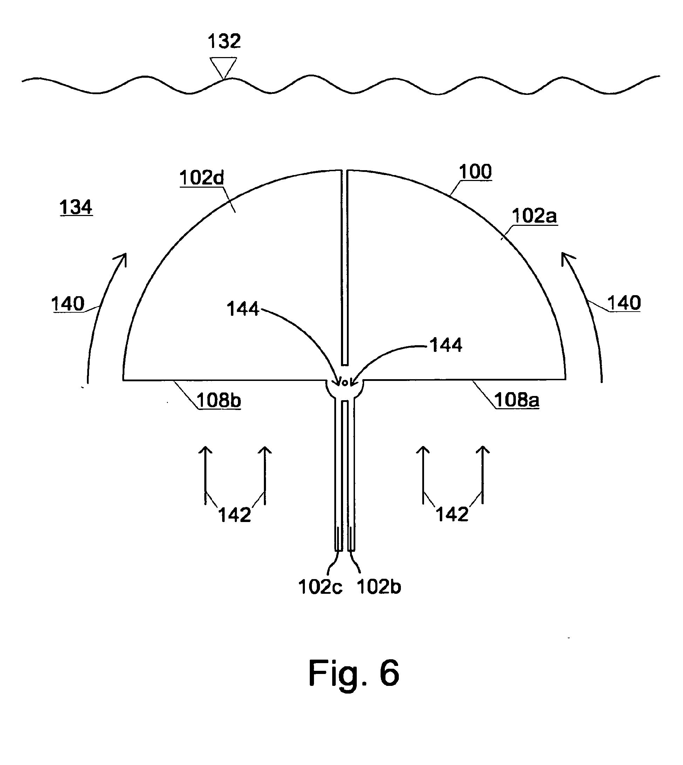

Nachfolgend wird mit Bezug auf Fig. 6 bis Fig. 9 ein erster Antriebszyklus des Motors 122 beschrieben.

Der Motor 122 ist gemäß einer Ausführungsform vollständig in einem Fluid, z.B. Wasser, untergetaucht. Das heißt, gemäß einer Ausführungsform befindet sich der Motor 122 unterhalb einer Fluidoberfläche 132 eines Fluids 134.

Fig. 6 zeigt das deformierbare Element 100 in einer Ausgangsposition der Zykliereinheit gemäß Ausführungsformen der hierin offenbarten Gegenstände, wobei in Fig. 6 die Schwimmkörper 116 aus Gründen der Übersichtlichkeit nicht dargestellt sind.

Der erste Antriebszyklus beginnt mit einem Entriegeln des Schwimmkörpers 116 und des deformierbaren Elements, beispielsweise durch Zurückziehen des zweiten Verriegelungselements 138 von den Vorsprüngen 136 (siehe Fig. 5, in Fig. 6 nicht dargestellt), wodurch der Schwimmkörper und die unteren Segmente 102b, 102c freigegeben werden. Das Freigeben der Schwimmkörper 116 bzw. des deformierbaren Elements 100 erlaubt eine Entfaltung der unteren Segmente 102b, 102c, d.h. ein Befüllen der unteren Segmente mit Luft. Kurz gesagt bedingt die Konfiguration des Motors 122, dass der auf die oberen Segmente 102a, 102b wirkende Wasserauftrieb in ein Drehmoment an den Seiten der unteren Segmente 102b, 102c aufgeht. Dieses Drehmoment führt zur Komprimierung der oberen Segmente 102a, 102d und drängt das Füllmedium 103 aus ihnen heraus in die unteren Segmente 102b, 102c.

Genauer gesagt wirkt eine Auftriebskraft auf die unteren Seitenwände 108a, 108b der oberen Segmente 102a, 102d des deformierbaren Elements 100. Dies führt zu einer Aufwärtsbewegung der unteren Seitenwände 108a, 108b, wobei die Aufwärtsbewegung in Fig. 6 durch die Pfeile 140 angezeigt wird. Der Wasserdruck, der auf die unteren Seitenwände 108a, 108b wirkt, ist bei 142 angegeben.

Die Aufwärtsbewegung der unteren Seitenwände 108a, 108b führt dazu, dass die Luft aus den oberen Segmenten 102a, 102d in die unteren Segmente 102b, 102c gedrückt wird. Die daraus resultierende Luftströmung ist bei 144 angegeben.

Fig. 7 zeigt den Motor 122 und insbesondere das deformierbare Element 100 in dem in Fig. 6 dargestellten Zustand zusammen mit den beiden Schwimmkörpern 116, die zwischen den oberen Segmenten 102a, 102d und den unteren Segmenten 102b, 102c angeordnet sind.

Neben dem mit Bezug auf Fig. 5 erläuterten ersten Verriegelungsmechanismus kann gemäß einer weiteren Ausführungsform ein zweiter Verriegelungsmechanismus 153 vorgesehen sein, mit welchem ein Paar von sich gegenüberliegenden Seitenwänden 108c, 108d von zwei verschiedenen Segmenten 102a, 102d ortsfest fixierbar sind. Auf diese Weise ist das deformierbare Element 100 räumlich fixierbar, während die Schwimmkörper 116 beweglich bleiben. Gemäß einer Ausführungsform ist ein einziger zweiter Verriegelungsmechanismus 153 vorgesehen. Jedenfalls in dem exemplarisch in Fig. 7 dargestellten Motor 122 ist dies ausreichend, da die anderen beiden sich gegenüberliegenden Seitenwände 108e, 108f durch die Konfiguration der Zykliereinheit (Füllungsgrad des deformierbaren Elements und der an das deformierbare Element angepasste Form der Schwimmkörper) ebenfalls fixiert sind. Gemäß einer anderen Ausführungsform kann der Motor 122 jedoch auch einen weiteren zweiten Verriegelungsmechanismus zum räumlich Fixieren eines weiteren Paars von einander gegenüberliegenden Seitenwänden, beispielsweise zum räumlich Fixieren der Seitenwände 108e, 108f, aufweisen.

Der erste Verriegelungsmechanismus 153 verhindert in einer Ausführungsform eine unerwünschte Drehung der gesamten Zykliereinheit während der Aufwärtsbewegung der Schwimmkörper 116 in die obere Position. Demnach ist gemäß einer Ausführungsform bereits in dem in Fig. 6 und Fig. 7 dargestellten Zustand des Motors 122 mindestens ein Paar von einander gegenüberliegenden Seitenwänden 108c, 108d bzw. 108e, 108f durch jeweils ein erstes Verriegelungselement 154 und ein zweites Verriegelungselement 156 ortsfest arretiert. Der zweite Verriegelungsmechanismus 153 umfasst dabei in einer Ausführungsform als erstes Verriegelungselement einen Vorsprung 154, der mit der betreffenden, zu arretierenden Seitenwand 108c, 108d verbunden ist. Ferner umfasst der zweite Verriegelungsmechanismus 153 das zweite Verriegelungselement 156, beispielsweise in Form einer Gabel, welches in eine vorgeschobene Position bringbar ist, in welcher das zweite Verriegelungselement 156 die ersten Verriegelungselemente 154 an den Seitenwänden umgreift und dadurch räumlich fixiert. Um die beiden Seitenwände 108c, 108d freizugeben, ist das zweite Verriegelungselement 156 in eine zurückgezogene Position bringbar, in welchem das zweite Verriegelungselement 156 außer Eingriff mit den ersten Verriegelungselementen 154 ist. Eine Herstellung der ersten, verriegelnden Position und der zweiten, freigebenden Position kann durch einen Aktor 158 erfolgen, der durch ein entsprechendes Steuersignal 162 von einer Steuervorrichtung 160 steuerbar ist. Gemäß einer Ausführungsform ist eine Sensorvorrichtung 161 vorgesehen, welche ein Sensorsignal 163 an die Steuervorrichtung 160 liefert. Die Steuervorrichtung 160 ist gemäß einer Ausführungsform ausgebildet, um in Reaktion auf das Sensorsignal 163 ein Steuersignal (z. B. das Steuersignal 162) für mindestens einen Aktor des Motors zu erzeugen.

Die ersten Verriegelungselemente 136 des ersten Verriegelungsmechanismus (siehe Fig. 5) und die ersten Verriegelungselemente 154 des zweiten Verriegelungsmechanismus 153 können beide in einem radial äußeren Umfangsbereich angeordnet und in axialer Richtung gegeneinander versetzt sein, so dass eine unabhängige Betätigung des ersten Verriegelungsmechanismus und des zweiten Verriegelungsmechanismus möglich ist. Andere Konfigurationen sind jedoch ebenfalls möglich. Beispielsweise kann ein Verriegelungsmechanismus, beispielsweise der erste Verriegelungsmechanismus 135, mittels welchem die beiden Schwimmkörper aneinander fixierbar sind, an einer Stirnfläche der Schwimmkörper 116 angeordnet sein, wie in Fig. 7 dargestellt.

Wie in den Figuren beispielhaft dargestellt, können die entsprechenden Verriegelungsmechanismen 135, 153 durch gesteuerte Aktoren betätigt sein. Gemäß anderen Ausführungsformen sind die Verriegelungsmechanismen rein mechanisch betätigt und sind von der Bewegung von einem oder mehreren Elementen der Zykliereinheit und/oder von der Bewegung des Antriebselements der betreffenden Zykliereinheit gesteuert.

Auch die Schwimmkörper 116 sind einer Auftriebskraft unterworfen, die durch die Kopplung des betreffenden Schwimmkörpers 116 mit seinem Antriebselement (nicht dargestellt in Fig. 7) gemäß einer Ausführungsform zu einer Drehbewegung 146 des Schwimmkörpers 116 führt. Die Drehbewegung 146 führt letztlich zu einer Aufwärtsbewegung des Schwimmkörpers 116 von der unteren Position, die in Fig. 7 dargestellt ist hin zu einer oberen Position, die in Fig. 8 dargestellt ist.

Fig. 8 zeigt folglich den Motor 122 in einem Zustand, in welchem der Schwimmkörper bzw. die Schwimmkörper 116 sich in einer oberen Position befinden, die oberen Segmente 102a, 102d komprimiert sind und die unteren Segmente 102b, 102c mit dem Füllmedium 103 gefüllt sind.

Im Detail erfolgt gemäß einer Ausführungsform das Expandieren der unteren Segmente 102b, 102c wie folgt: Durch die einfließende Luft aus der Luftströmung 144 aus den oberen Segmenten 102a, 102d dehnen sich die unteren Segmente 102b, 102c zunehmend aus und werden ihren Volumina entsprechend dem Wasserdruck ausgesetzt. Gemäß einer Ausführungsform kann eine Sperrvorrichtung vorgesehen sein, welche verhindert, dass das bereits expandierte Segment entgegen der Expansionsrichtung durch den Wasserdruck wieder zusammengedrückt wird. Eine solche Sperrvorrichtung kann beispielsweise mittels einer Zahnstange 150 und einer Sperrklinke 152 realisiert werden, wobei die Sperrklinke in Richtung der Zahnstange 150 vorgespannt ist und auf diese Weise mit dieser in Eingriff ist. Bei einer Expansionsbewegung (entsprechend der Aufwärtsbewegung 146 der Schwimmkörper 116) gleitet die Sperrklinke über Rastnasen der Zahnstange 150, verhindert jedoch eine Bewegung in entgegengesetzter Richtung durch entsprechende Formgebung der Sperrklinke und der Rastnasen auf der Zahnstange 150. Die Sperrvorrichtung 150, 152 kann jedoch gemäß anderer Ausführungsformen auf beliebige andere Weise realisiert werden, beispielsweise mittels eines Freilaufs oder mittels eines Aktors, der auf ein Sensorsignal, das auf eine Bewegung entgegen einer Expansion der unteren Segmente 102b, 102c hinweist, in Eingriff bringt und damit eine solche Gegenbewegung verhindert. Es versteht sich, dass gemäß einer Ausführungsform auch die oberen Segmente 102a, 102d eine solche Sperrvorrichtung aufweisen können, die aktiviert wird um die beschriebene Sperrwirkung auszuüben und eine unerwünschte Gegenbewegung zu verhindern. Ferner erkennt der Fachmann, dass in einer Ausführungsform die Sperrvorrichtung deaktivierbar ist um die beschriebene Sperrwirkung nicht auszuüben und die Gegenbewegung zuzulassen. Die Gegenbewegung ist beispielsweise bei einer Komprimierung von Segmenten, beispielsweise bei der Komprimierung der oberen Segmente, erforderlich. Die Aktivierung/Deaktivierung der Sperrvorrichtung kann beispielsweise rein mechanisch oder durch gesteuerte Aktoren erfolgen.

Durch die Sperrvorrichtung 150, 152 wird verhindert, dass der auf die unteren Segmente 102b, 102c wirkende Wasserdruck als Gegendruck gegen die Luftströmung aus den oberen Segmenten 102a, 102d wirkt. Solange sie an der unteren Position sind, werden die unteren Segmente 102b, 102c den Wasserdruck vielmehr als Drehmoment an die Schwimmkörper 116 weitergeben. Dadurch, dass die Volumensumme der Segmente 102a, 102b, 102c, 102d unverändert bleibt, bleibt auch im Endergebnis der für ihre Summe geltende Wasserdruck und damit auch die Summe der dadurch entstandenen Drehmomente konstant. Durch die Strammhaltung der Oberfläche der jeweils unten stehenden Segmente durch die Sperrvorrichtung 150, 152 kann die Anlage zusätzliche Kraft gewinnen. Wenn die Haut der unten stehenden Segmente stramm gehalten wird, verhalten sich die unten stehenden Segmente wie Schwimmer. Sie werden dann nicht mehr deformierbar sein. Dadurch wird der negative Wasserdruck an der Oberfläche abgewehrt. Hinzu kommt, dass die unten stehenden Segmente, wie es bei den Schwimmkörpern der Fall ist, einen Auftrieb erfahren. De facto wird der Wasserdruck, der zuvor die unteren Segmente verformte und als negative Kraft gegolten hat, nunmehr in Antriebskraft umgewandelt und die unten stehenden Kammern nach oben expandieren. Dies führt zur Erhöhung der Leistung auf das Zweifache.

Die Summe der Drehmomente, die auf die Schwimmkörper 116 wirken (d.h. Drehmoment auf die Schwimmkörper 116 und Drehmoment auf die unteren Seitenwände 108a, 108b der oberen Segmente 102a, 102d (siehe Fig. 6)), wird über die Kopplungsvorrichtung, welche die Schwimmkörper 116 an das zugeordnete Antriebselement koppelt, an das betreffende Antriebselement weitergeleitet. Wie in Fig. 4 dargestellt, können diese Drehmomente an den Antriebselementen über die Wellenvorrichtung 124 dem Getriebe 128 zugeführt werden, zur Kombination der durch die Zykliereinheiten 120a, 120b gelieferten Drehmomente und Bereitstellen eines Ausgangsdrehmoments an der Abtriebswelle 130 (siehe Fig. 4).

In dem in Fig. 8 dargestellten Zustand, in welchem sich die Schwimmkörper 116 in ihrer oberen Position befinden, wird gemäß einer Ausführungsform jeder Schwimmkörper 116 bezüglich des deformierbaren Elements 100 fixiert, beispielsweise durch den mit Bezug auf Fig. 5 beschriebenen ersten Verriegelungsmechanismus 135, beispielsweise durch die Verriegelungselemente 136, 138.

Der zweite Verriegelungsmechanismus 153 hält die einander gegenüberliegenden Seitenwände 108c, 108d der oberen Segmente 102a, 102d arretiert und, wie oben beschrieben, durch die Konfiguration der Zykliereinheit 120a, 120b indirekt auch die einander gegenüberliegenden Seitenwände 108f, 108e der unteren Segmente 102b, 102c arretiert, bis die beiden Schwimmkörper 116 in ihrer oberen Position angelangt sind (Fig. 8). Wenn die Schwimmkörper 116 in ihrer oberen Position angelangt sind, wird der erste Verriegelungsmechanismus 135 betätigt, um die beiden Schwimmkörper 116 miteinander zu verriegeln, dadurch verriegelnd die Position des Schwimmkörpers 116 relativ zu seinem benachbarten deformierbaren Element, z.B. relativ zu seinem benachbarten Segment des deformierbaren Elements 100.

Nun wird der zweite Verriegelungsmechanismus 153 in seine freigebende Position gebracht, um die ersten Verriegelungselemente 154 freizugeben.

In der Konfiguration in Fig. 8 haben die obenstehenden Schwimmkörper 116 eine höhere Dichte ($\rho_{FT}$ = 106 kg/m$^3$) als die gefüllten unteren Segmente 102b, 102c ($\rho_{FLBF}$ = 23 kg/m$^3$).

Durch diese Dichtendifferenz liegt der Schwerpunkt der beiden Zykliereinheiten 120a, 120b über den Antriebselementen und über der Achse 106. Dadurch bewegen sich die durch die erste Verriegelungsvorrichtung verriegelten Zykliereinheiten zusammen mit den Schwimmkörpern 116 nach unten, z.B. in einer Linksdrehung 164, wie in Fig. 8 angegeben. Es versteht sich, dass die Drehbewegung auch in der entgegengesetzten Richtung, entgegengesetzt zu der Linksdrehung 164 erfolgen kann. Gemäß einer Ausführungsform kann vorgesehen sein, dass der zweite Verriegelungsmechanismus 153, beispielsweise das zweite Verriegelungselement 156 beim Freigeben der Seitenwände 108c, 108d auf die Zykliereinheiten 120a, 120b ein Drehmoment ausübt, welches zu einer Drehung der Zykliereinheiten 120a, 120b führt, wie in Fig. 8 durch die Pfeile 164 angegeben ist.

Gemäß einer Ausführungsform wird die Gesamtheit der Schwimmkörper 116 und der Segmente 102a, 102b, 102c, 102d als Hauptkorpus bezeichnet. Insofern kann bei der Drehung 164 auch von einer Drehung des Hauptkorpus gesprochen werden, wobei bei dieser Drehung die Elemente des Hauptkorpus, insbesondere die Schwimmkörper 116 und die Segmente 102a, 102b, 102c, 102d gegeneinander verriegelt sind, so dass ihre relativen Positionen innerhalb des Hauptkorpus unverändert bleiben.

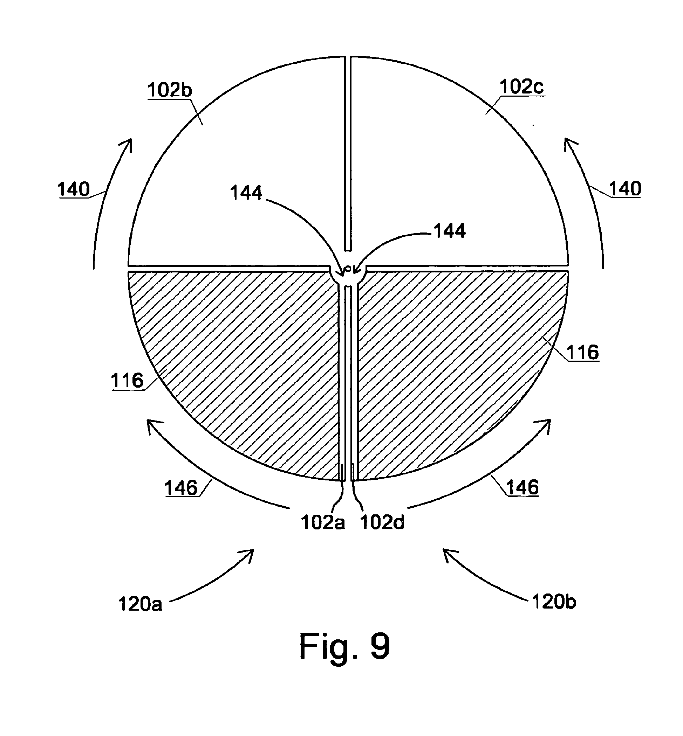

Folglich bewegen sich die Zykliereinheiten 120a, 120b solange, bis der Schwerpunkt der Zykliereinheiten unter der Achse 106 in einer Gleichgewichtsposition liegt. Diese Position, die bezüglich des Schwerpunktes eine Gleichgewichtsposition ist, ist in Fig. 9 dargestellt. Diese Position wird hierin allgemein als Ausgangsposition bezeichnet, da sie die Ausgangsposition für eine Aufwärtsschwenkbewegung der Schwimmkörper 116 und ein Komprimieren der oberen Segmente (nun, in Fig. 9) 102b, 102c bewirkt. Bevor die erste Verriegelungsvorrichtung 138 die beiden Schwimmkörper 116 freigibt und dadurch eine Aufwärtsbewegung der Schwimmkörper erlaubt, werden die zweiten Verriegelungsvorrichtungen 153 wieder in ihre vorgeschobene Position, das heißt in ihre verriegelnde Position, gebracht, um die einander gegenüberliegenden Seitenwände 108e, 108f und 108c, 108d räumlich zu fixieren. Damit die Drehung der Zykliereinheiten nicht über 180° hinausgeht, greifen gemäß einer Ausführungsform die zweiten Verriegelungsvorrichtungen auf die sich nach oben drehenden Segmente 102b, 102c vorzeitig zu und halten sie dann bei 180° Drehung an.

Anschließend erfolgt die Freigabe der Schwimmkörper 116 sowie die Aufwärtsbewegung der Schwimmkörper 116, die Komprimierung der oberen Segmente 102b, 102c und das Befüllen der unteren Segmente 102a, 102d, analog zu der Beschreibung von Fig. 7.

Wie aus den vorstehenden Ausführungen ersichtlich, ist folglich mit der erfindungsgemäßen Ausgestaltung eines Motors ein kontinuierlicher Betrieb des Motors möglich.

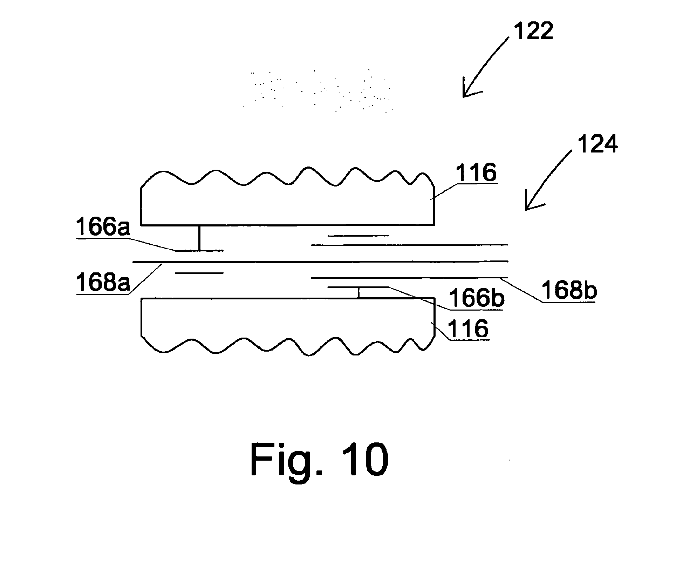

Fig. 10 zeigt einen Teil des Motors 122 aus Fig. 4 gemäß Ausführungsformen der hierin offenbarten Gegen-stände. Fig. 10 zeigt eine Kopplungsvorrichtung 166a, 166b, die angepasst ist zum Koppeln des Schwimmkörpers 116 mit dem jeweiligen Antriebselement 168a, 168b während der Aufwärtsbewegung des Schwimmkörpers 116, um dadurch das Antriebselement 166a, 166b anzutreiben. Die Antriebselemente 168a, 168b bilden in einer Ausführungsform beispielsweise die Wellenvorrichtung 124, wie sie mit Bezug auf Fig. 4 beschrieben wurde. Die Kopplungsvorrichtungen 166a, 166b sind beispielsweise Kupplungen, die durch nicht dargestellte Aktoren betätigt werden. Gemäß einer Ausführungsform sind die Kopplungsvorrichtungen 166a, 166b Teil eines Getriebes, das in Fig. 4 schematisch dargestellt und mit 128 bezeichnet ist. Gemäß einer Ausführungsform kann ein Planetengetriebe radial innerhalb der Zykliereinheiten angeordnet sein, beispielsweise in dem Durchgangsloch 105. Gemäß einer Ausführungsform können die Antriebselemente 168a, 168b Teile des Planetengetriebes sein.

Die Kopplungsvorrichtungen 166a, 166b sind ferner angepasst zum Entkoppeln des Schwimmkörpers 116 von dem Antriebselement während des Treibens der Zykliereinheit in die Ausgangsposition. Diese Entkopplung kann beispielsweise durch Öffnen der Kupplungen erfolgen.

Gemäß anderer Ausführungsformen können andere Kopplungsvorrichtungen verwendet werden, um die hierin beschriebenen Funktionen bereitzustellen.

Es wird darauf hingewiesen, dass die hierin beschriebenen Ausführungsformen lediglich eine beschränkte Auswahl an möglichen Ausführungsvarianten der Erfindung darstellen. So ist es zum Beispiel möglich, die Merkmale einzelner Ausführungsformen in geeigneter Weise miteinander zu kombinieren, so dass für den Fachmann mit den hier explizit offenbarten Ausführungsvarianten eine Vielzahl von verschiedenen Ausführungsformen als offensichtlich bzw. implizit offenbart anzusehen sind. Ferner sollte erwähnt werden, dass die Begriffe wie "ein" oder "eines" eine Mehrzahl nicht ausschließen. Begriffe wie "enthaltend" oder "aufweisend" schließen weitere Merkmale oder Verfahrensschritte nicht aus. Es sollte sich ferner verstehen, dass die hierin offenbarten Verriegelungsmechanismen bzw. ihre Art der Betätigung lediglich beispielhaft sind, und dass jede geeignete Form von Verriegelungsmechanismus und jede geeignete Art der Betätigung eines Verriegelungsmechanismus möglich und zusammen mit den hierin offenbarten Gegenständen implementierbar ist. Beispielsweise kann anstelle der durch eine Steuervorrichtung gesteuerten Aktoren vorgesehen sein, dass die Verriegelungsmechanismen oder die Kopplungselemente durch eine geeignete mechanische Konfiguration automatisch rein mechanisch durch den Betrieb des Motors betätigt werden.

Es sollte sich ferner verstehen, dass jede hierin offenbarte Entität (z.B. Komponente, Einheit, Mechanismus oder Vorrichtung) nicht auf eine dezidierte Entität beschränkt ist, wie sie in einigen Ausführungsformen beschrieben ist. Vielmehr können die hierin offenbarten Gegenstände auf verschiedene Weisen implementiert werden und mit verschiedenen Granularitäten auf Vorrichtungsebene oder auf Steuerungsmodulebene, während immer noch die gewünschte und hierin beschriebene Funktionalität geliefert wird. Ferner sollte sich verstehen, dass gemäß einigen Ausführungsformen für jede hierin offenbarte Funktion eine separate Entität vorgesehen sein kann. Ferner kann gemäß anderen Ausführungsformen eine Entität vorgesehen sein, die zwei oder mehr von hierin offenbarten Funktionen bereitstellt. Gemäß einer Ausführungsform enthält die Steuervorrichtung eine Prozessorvorrichtung mit mindestens einem Prozessor zum Ausführen von mindestens einem Computerprogramm, welches einem entsprechenden Softwaremodul entspricht.

Zusammenfassend bleibt festzustellen:

Offenbart wird ein Motor, welcher eine hydrostatische Kraft verwendet zur Erzeugung eines sich aufgrund einer Verlagerung des Schwerpunkts einer Zykliereinheit 120a, 120b sich ergebenden Drehmoments. Schwimmkörper 116 sind in einem Fluid 134 einer Auftriebskraft unterworfen, die zu einer Aufwärtsbewegung 146 der Schwimmkörper führt und diese in eine obere Position treibt. Durch die Aufwärtsbewegung wird ein Antriebselement 168a, 168b angetrieben. Durch die Aufwärtsbewegung wird ferner Luft aus oberen Segmenten 102a, 102d eines deformierbaren Elementes 100 in untere Segmente 102b, 102c gedrückt und dadurch der Schwerpunkt der Zykliereinheiten, welche die Schwimmkörper 116 und das deformierbare Element 100 umfassen, über eine Drehachse 106 angehoben. Diese erhöhte Schwerpunktslage ermöglicht, wenn die Schwimmkörper 116 in ihrer oberen Position angelangt sind, eine Rotation der Zykliereinheiten in ihre Ausgangsposition.

Bezugszeichenliste

| | |
|---|---|
| 100 | deformierbares Element |
| 102a, 102b, 102c, 102d | Segment von 100 |
| 103 | Füllmedium |
| 104 | Zentralbereich |
| 105 | Durchgangsloch |
| 106 | Achse |
| 108 | Seitenwände von 100 |
| 110 | radial äußerer Bereich von 100 |
| 112 | Rahmenstangen |
| 113 | Umfangsrichtung |
| 114 | Außenwand |
| 116 | Schwimmkörper |
| 118a, 118b | Seitenwand von 116 |
| 120a, 120b | Zykliereinheit |
| 122 | Motor |
| 124 | Wellenvorrichtung |
| 126 | Lagerung der Wellenvorrichtung |
| 128 | Getriebe |
| 130 | Abtriebswelle |
| 132 | Fluidoberfläche |
| 134 | Fluid |
| 135 | erster Verriegelungsmechanismus |
| 136 | erstes Verriegelungselement von 135 |
| 138 | zweites Verriegelungselement von 135 |
| 140 | Aufwärtsbewegung |
| 142 | Wasserdruck |
| 144 | Luftströmung |
| 146 | Drehbewegung (Aufwärtsbewegung) von 116 |
| 150 | Zahnstange |
| 152 | Sperrklinke |
| 153 | zweiter Verriegelungsmechanismus |
| 154 | erstes Verriegelungselement von 153 |
| 156 | zweites Verriegelungselement von 153 |
| 158 | Aktor |
| 160 | Steuervorrichtung |
| 161 | Sensorvorrichtung |
| 162 | Steuersignale |
| 163 | Sensorsignal |
| 164 | Drehung der Zykliereinheiten |
| 166a, 166b | Kopplungsvorrichtung |
| 168a, 168b | Antriebselement |

**EP 2 681 446 B1**

**Patentansprüche**

1. Motor, welcher ausgebildet ist, um unter Verwendung einer hydrostatischen Kraft ein Drehmoment zu erzeugen, wobei das Drehmoment sich aufgrund einer Verlagerung des Schwerpunkts einer Dreheinheit (120a, 120b) ergibt, und wobei der Motor ein Antriebselement (168a, 168b) und die Dreheinheit (120a, 120b) einen starren formstabilen Schwimmkörper (116) aufweist; und

   wobei die Dreheinheit (120a, 120b) in einem flüssigen Fluid (134) angeordnet ist, so dass der Schwimmkörper (116), dessen relative Dichte geringer als die relative Dichte des flüssigen Fluids ist, in einer unteren Position einer Auftriebskraft unterworfen ist, welche den Schwimmkörper (116) in einer Aufwärtsbewegung (146) in eine obere Position treibt und dadurch das Antriebselement (124) antreibt; und

   wobei der Schwerpunkt der Dreheinheit (120a, 120b) mit dem Schwimmkörper (116) in der oberen Position über dem Antriebselement (124) liegt und der Schwerpunkt dadurch die Dreheinheit (120a, 120b) in eine Ausgangsposition treibt, in welcher der Schwimmkörper (116) in der unteren Position ist; und

   wobei die Dreheinheit (120a, 120b) ferner enthält:

   ein deformierbares Element (100) enthaltend ein gasförmiges Füllmedium (103);

   wobei der Schwimmkörper (116) und das deformierbare Element (100) in dem flüssigen Fluid (134) angeordnet sind, so dass

   der Schwimmkörper (116) einen ersten Teil (102a, 102d) des deformierbaren Elements (100) während der Aufwärtsbewegung (146) komprimiert, wobei der erste Teil (102a, 102d) über dem Schwimmkörper (116) angeordnet ist;

   das Komprimieren des ersten Teils (102a, 102d) des deformierbaren Elements (100) das gasförmige Füllmedium (103) in einen zweiten Teil (102b, 102c) des deformierbaren Elements (100) drängt, wobei der zweite Teil (102b, 102c) unter dem Schwimmkörper (116) angeordnet ist.

2. Motor nach Anspruch 1, wobei der Schwimmkörper (116) in der oberen Position mit dem deformierbaren Element (100) verriegelbar ist, dadurch resultierend in einem verriegelten Zustand der Dreheinheit (120a, 120b), wobei der Schwerpunkt der Dreheinheit (120a, 120b) in ihrem verriegelten Zustand mit dem Schwimmkörper (116) in der oberen Position über dem Antriebselement (124) liegt und der Schwerpunkt dadurch die Dreheinheit (120a, 120b) in die Ausgangsposition treibt.

3. Motor nach Anspruch 1 oder 2, ferner enthaltend eine Kopplungsvorrichtung (166a, 166b) angepasst zum Koppeln des Schwimmkörpers (116) mit dem Antriebselement (168a, 168b) während der Aufwärtsbewegung des Schwimmkörpers (116), um dadurch das Antriebselement (168a, 168b) anzutreiben.

4. Motor nach einem der Ansprüche 1 bis 3,

   wobei das Antriebselement (168a, 168b) ein rotierbares Element ist, welches eine Rotationsachse (106) aufweist;

   wobei das deformierbare Element (100) und der Schwimmkörper (116) konfiguriert sind für eine gemeinsame Rotation (164) um die Rotationsachse (106) während des Treibens der Dreheinheit (120a, 120b) in die Ausgangsposition.

5. Motor nach Anspruch 4,

   ferner enthaltend einen Verriegelungsmechanismus (135) zum Verriegeln der Position des Schwimmkörpers (116) relativ zu dem deformierbaren Element (100) während der gemeinsamen Rotation (164) um die Rotationsachse (106);

   wobei das Verriegelungselement (135) konfiguriert ist zum Entriegeln des Schwimmkörpers (116) und des deformierbaren Elements (100), dadurch erlaubend eine nachfolgende Aufwärtsbewegung (146) des Schwimmkörpers (116).

6. Motor nach einem der vorhergehenden Ansprüche,

   wobei die Dreheinheit eine erste Dreheinheit (120a) ist; und

   der Motor (122) ferner eine zweite Dreheinheit (120b) aufweist, die konfiguriert ist wie die Dreheinheit (120a) definiert in einem der vorhergehenden Ansprüche; und

   wobei die erste Dreheinheit (120a) und die zweite Dreheinheit (120b) konfiguriert sind für eine gemeinsame Rotation um eine gemeinsame Rotationsachse (106).

7. Verfahren des Betreibens eines Motors nach einem der Ansprüche 1 bis 6, das Verfahren enthaltend:

   Räumlich Fixieren der Dreheinheit (120a, 120b) in der Ausgangsposition innerhalb eines flüssigen Fluids;
   Anschließend Freigeben des Schwimmkörpers (116) in der unteren Position, um dem Schwimmkörper (116)

17

so zu erlauben, die Aufwärtsbewegung zu der oberen Position durchzuführen und dabei das Antriebselement (168a,168b) anzutreiben;

mit dem Schwimmkörper (116) in der oberen Position, Überführen der Dreheinheit (120a, 120b) in einen verriegelten Zustand, in welchem der Schwimmkörper (116) bezüglich der Dreheinheit (120a, 120b) räumlich fixiert ist; und

Freigeben der Dreheinheit (120a, 120b), um der Dreheinheit zu erlauben, sich in die Ausgangsposition zu bewegen, in welcher der Schwimmkörper (116) in der unteren Position ist.

8. Computerprogramm zum Bereitstellen eines physikalischen Objektes, nämlich eines Steuersignals (162), wobei das Computerprogramm angepasst ist, um, wenn es durch eine Prozessorvorrichtung ausgeführt wird, das Verfahren nach Anspruch 7 auszuführen.

9. Verwendung einer hydrostatischen Kraft zur Produktion eines aufgrund einer Verlagerung des Schwerpunkts einer Dreheinheit (120a, 120b) sich ergebenden Drehmoments,

wobei die Dreheinheit ein deformierbares Element (100), enthaltend ein gasförmiges Füllmedium (103), und einen starren formstabilen Schwimmkörper (116) aufweist, die in einem flüssigen Fluid (134) angeordnet sind, so dass der Schwimmkörper (116) einen ersten Teil (102a, 102d) des deformierbaren Elements (100) während der Aufwärtsbewegung (146) komprimiert, wobei der erste Teil (102a, 102d) über dem Schwimmkörper (116) angeordnet ist; und

das Komprimieren des ersten Teils (102a, 102d) des deformierbaren Elements (100) das Füllmedium (103) in einen zweiten Teil (102b, 102c) des deformierbaren Elements (100) drängt, wobei der zweite Teil (102b, 102c) unter dem Schwimmkörper (116) angeordnet ist.

**Claims**

1. A motor which is designed to generate a torque using a hydrostatic force, wherein the torque is generated on the basis of a displacement of the center of gravity of a rotary unit (120a, 120b), and wherein the motor has a drive element (168a, 168b) and the rotary unit (120a, 120b) has a rigid, dimensionally stable float body (116);

wherein the rotary unit (120a, 120b) is arranged in a liquid fluid (134) such that the float body (116) whose relative density is lower than the relative density of the liquid fluid is, in a lower position, subject to a buoyant lift force which drives the float body (116) in an upward movement (146) into an upper position and thereby drives the drive element (124); and

wherein the center of gravity of the rotary unit (120a, 120b), with the float body (116) in the upper position, is situated above the drive element (124), and the center of gravity thereby drives the rotary unit (120a, 120b) into an initial position in which the float body (116) is in the lower position; and

wherein the rotary unit (120a, 120b) also comprises:

a deformable element (100) comprising a gaseous fill medium (103);

wherein the float body (116) and the deformable element (100) are arranged in the liquid fluid (134) such that the float body (116) compresses a first part (102a, 102d) of the deformable element (100) during the upward movement (146), wherein the first part (102a, 102d) is arranged above the float body (116);

the compression of the first part (102a, 102d) of the deformable element (100) forces the gaseous fill medium (103) into a second part (102b, 102c) of the deformable element (100), wherein the second part (102b, 102c) is arranged below the float body (116).

2. The motor as claimed in claim 1, wherein the float body (116) can, in the upper position, be locked to the deformable element (100), thereby resulting in a locked state of the rotary unit (120a, 120b), wherein the center of gravity of the rotary unit (120a, 120b) in its locked state, with the float body (116) in the upper position, is situated above the drive element (124), and the center of gravity thereby drives the rotary unit (120a, 120b) into the initial position.

3. The motor as claimed in claim 1 or 2, also comprising a coupling device (166a, 166b) designed for coupling the float body (116) to the drive element (168a, 168b) during the upward movement of the float body (116), in order thereby to drive the drive element (168a, 168b).

4. The motor as claimed in one of claims 1 to 3,

wherein the drive element (168a, 168b) is a rotatable element which has an axis of rotation (106);

wherein the deformable element (100) and the float body (116) are configured for conjoint rotation (164) about the axis of rotation (106) during the driving of the rotary unit (120a, 120b) into the initial position.

**5.** The motor as claimed in claim 4,
also comprising a locking mechanism (135) for locking the position of the float body (116) relative to the deformable element (100) during the conjoint rotation (164) about the axis of rotation (106);
wherein the locking element (135) is configured for unlocking the float body (116) and the deformable element (100), thereby permitting a subsequent upward movement (146) of the float body (116).

**6.** The motor as claimed in one of the preceding claims,
wherein the rotary unit is a first rotary unit (120a); and
the motor (122) also has a second rotary unit (120b) which is configured in the manner of the rotary unit (120a) defined in one of the preceding claims; and
wherein the first rotary unit (120a) and the second rotary unit (120b) are configured for conjoint rotation about a common axis of rotation (106).

**7.** A method for operating a motor as claimed in one of claims 1 to 6, the method comprising:

spatially fixing the rotary unit (120a, 120b) in the initial position within a liquid fluid;
subsequently releasing the float body (116) in the lower position in order to enable the float body (116) to perform the upward movement to the upper position and thereby drive the drive element (168a, 168b);
with the float body (116) in the upper position, placing the rotary unit (120a, 120b) into a locked state in which the float body (116) is spatially fixed with respect to the rotary unit (120a, 120b); and
releasing the rotary unit (120a, 120b) in order to enable the rotary unit to move into the initial position in which the float body (116) is in the lower position.

**8.** A computer program for providing a physical object, specifically a control signal (162), wherein the computer program is configured to carry out the method as claimed in claim 7 when said computer program is executed by means of a processor device.

**9.** The use of a hydrostatic force for the production of a torque that is generated on the basis of a displacement of the center of gravity of a rotary unit (120a, 120b),
wherein the rotary unit has a deformable element (100), comprising a gaseous fill medium (103), and has a rigid, dimensionally stable float body (116), the deformable element and the float body being arranged in a liquid fluid (134) such that
the float body (116) compresses a first part (102a, 102d) of the deformable element (100) during the upward movement (146), wherein the first part (102a, 102d) is arranged above the float body (116);
the compression of the first part (102a, 102d) of the deformable element (100) forces the fill medium (103) into a second part (102b, 102c) of the deformable element (100), wherein the second part (102b, 102c) is arranged below the float body (116).

**Revendications**

**1.** Moteur réalisé pour générer un couple en utilisant une force hydrostatique, le couple s'obtenant sur la base d'un déplacement du centre de gravité d'une unité rotative (120a, 120b), et le moteur présentant un élément d'entraînement (168a, 168b) et l'unité rotative (120a, 120b) présentant un corps flottant rigide de forme stable (116) ; et
l'unité rotative (120a, 120b) étant disposée dans un fluide liquide (134) de telle sorte que le corps flottant (116), dont la densité relative est inférieure à la densité relative du fluide liquide, soit soumis dans une position inférieure à une force de sustentation qui entraîne le corps flottant (116) dans un déplacement vers le haut (146) dans une position supérieure et qui entraîne de ce fait l'élément d'entraînement (124) ; et
le centre de gravité de l'unité rotative (120a, 120b) avec le corps flottant (116) dans la position supérieure étant au-dessus de l'élément d'entraînement (124) et le centre de gravité entraînant de ce fait l'unité rotative (120a, 120b) dans une position de départ dans laquelle le corps flottant (116) est dans la position inférieure ; et
l'unité rotative (120a, 120b) contenant en outre :

un élément déformable (100) contenant un milieu de remplissage gazeux (103) ;
le corps flottant (116) et l'élément déformable (100) étant disposés dans le fluide liquide (134), de telle sorte que le corps flottant (116) comprime une première partie (102a, 102d) de l'élément déformable (100) pendant le déplacement vers le haut (146), la première partie (102a, 102d) étant disposée pardessus le corps flottant (116) ;
la compression de la première partie (102a, 102d) de l'élément déformable (100) refoule le milieu de remplissage gazeux (103) dans une deuxième partie (102b, 102c) de l'élément déformable (100), la deuxième partie (102b, 102c) étant disposée sous le corps flottant (116).

2. Moteur selon la revendication 1, dans lequel le corps flottant (116) dans la position supérieure peut être verrouillé avec l'élément déformable (100), ce qui résulte de ce fait en un état verrouillé de l'unité rotative (120a, 120b), le centre de gravité de l'unité rotative (120a, 120b) dans son état verrouillé avec le corps flottant (116) étant situé dans la position supérieure au-dessus de l'élément d'entraînement (124) et le centre de gravité entraînant de ce fait l'unité rotative (120a, 120b) dans la position de départ.

3. Moteur selon la revendication 1 ou 2, comprenant en outre un dispositif d'accouplement (166a, 166b) adapté pour l'accouplement du corps flottant (116) à l'élément d'entraînement (168a, 168b) pendant le déplacement vers le haut du corps flottant (116), afin d'entraîner de ce fait l'élément d'entraînement (168a, 168b).

4. Moteur selon l'une quelconque des revendications 1 à 3,
l'élément d'entraînement (168a, 168b) étant un élément rotatif qui présente un axe de rotation (106) ;
l'élément déformable (100) et le corps flottant (116) étant configurés pour une rotation commune (164) autour de l'axe de rotation (106) pendant l'entraînement de l'unité rotative (120a, 120b) dans la position de départ.

5. Moteur selon la revendication 4,
comprenant en outre un mécanisme de verrouillage (135) pour verrouiller la position du corps flottant (116) par rapport à l'élément déformable (100) pendant la rotation commune (164) autour de l'axe de rotation (106) ;
l'élément de verrouillage (135) étant configuré pour déverrouiller le corps flottant (116) et l'élément déformable (100), en permettant ainsi un déplacement vers le haut subséquent (146) du corps flottant (116).

6. Moteur selon l'une quelconque des revendications précédentes,
l'unité rotative étant une première unité rotative (120a) ; et
le moteur (122) présentant en outre une deuxième unité rotative (120b), qui est configurée comme l'unité rotative (120a) définie selon l'une quelconque des revendications précédentes ; et
la première unité rotative (120a) et la deuxième unité rotative (120b) étant configurées pour une rotation commune autour d'un axe de rotation commun (106).

7. Procédé pour faire fonctionner un moteur selon l'une quelconque des revendications 1 à 6, le procédé comprenant :

la fixation spatiale de l'unité rotative (120a, 120b) dans la position de départ à l'intérieur d'un fluide liquide ;
ensuite, la libération du corps flottant (116) dans la position inférieure, afin de permettre ainsi au corps flottant (116) d'effectuer le déplacement vers le haut jusqu'à la position supérieure et d'entraîner ainsi l'élément d'entraînement (168a, 168b) ;
avec le corps flottant (116) dans la position supérieure, le transfert de l'unité rotative (120a, 120b) dans un état verrouillé, dans lequel le corps flottant (116) est fixé spatialement par rapport à l'unité rotative (120a, 120b) ; et
la libération de l'unité rotative (120a, 120b) afin de permettre à l'unité rotative de se déplacer dans la position de départ dans laquelle le corps flottant (116) est dans la position inférieure.

8. Programme informatique pour fournir un objet physique, à savoir un signal de commande (162), le programme informatique étant adapté pour mettre en oeuvre le procédé selon la revendication 7, lorsqu'il est exécuté par un dispositif processeur.

9. Utilisation d'une force hydrostatique pour la production d'un couple s'obtenant sur la base d'un déplacement du centre de gravité d'une unité rotative (120a, 120b),
l'unité rotative présentant un élément déformable (100), contenant un milieu de remplissage gazeux (103), et un corps flottant rigide de forme stable (116), qui sont disposés dans un fluide liquide (134), de telle sorte que
le corps flottant (116) comprime une première partie (102a, 102d) de l'élément déformable (100) pendant le déplacement vers le haut (146), la première partie (102a, 102d) étant disposée pardessus le corps flottant (116) ; et
la compression de la première partie (102a, 102d) de l'élément déformable (100) refoule le milieu de remplissage (103) dans une deuxième partie (102b, 102c) de l'élément déformable (100), la deuxième partie (102b, 102c) étant disposée sous le corps flottant (116).

# Fig. 1

Fig. 2

Fig. 3

Fig. 4

EP 2 681 446 B1

Fig. 5

Fig. 6

Fig. 7

Fig. 8

Fig. 9

122

124

116

166a

168a

166b    168b

116

# Fig. 10

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- CA 2437599 A1
- US 4742242 A
- WO 03076798 A1
- WO 2004067952 A1
- US 3412482 A